(19) Europäisches Patentamt
European Patent Office
Office européen des brevets

(11) **EP 2 945 145 A1**

(12) **EUROPEAN PATENT APPLICATION**
published in accordance with Art. 153(4) EPC

(43) Date of publication:
**18.11.2015 Bulletin 2015/47**

(51) Int Cl.:
***G09B 29/00*** (2006.01)

(21) Application number: **13871007.4**

(86) International application number:
**PCT/JP2013/007221**

(22) Date of filing: **09.12.2013**

(87) International publication number:
**WO 2014/108957 (17.07.2014 Gazette 2014/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.01.2013 JP 2013001110**
**30.08.2013 JP 2013178833**

(71) Applicant: **NEC Corporation**
**Tokyo 108-8001 (JP)**

(72) Inventor: **ISHIDA, Masahiko**
**Tokyo 108-8001 (JP)**

(74) Representative: **Vossius & Partner**
**Patentanwälte Rechtsanwälte mbB**
**Siebertstrasse 3**
**81675 München (DE)**

(54) **COORDINATE CONVERSION DEVICE, NON-TRANSITORY COMPUTER READABLE MEDIUM IN WHICH COORDINATE CONVERSION PROGRAM IS STORED, AND COORDINATE CONVERSION METHOD**

(57)     Provided are a coordinate transformation device, a coordinate transformation program, and a coordinate transformation method which are capable of calculating coordinates on a spheroid at a high speed and with a minimum error. A geographical information management device (100) includes a storage device (2) and a operation unit (3). The storage device (2) stores a basic shape database (D1), an airspace information database (D2), and a parameter information database (D3). The operation unit (3) generates a formula for performing coordinate transformation processing by substituting a transformation parameter included in the parameter information database (D3) into a predetermined formula, transforms information indicating coordinates on a spheroid into coordinates on a true sphere by substituting, into the generated formula, information specifying the shape of the spheroid included in the basic shape database (D1) and information indicating coordinates on the spheroid included in the airspace information database (D2), and outputs the transformed information indicating coordinates on the true sphere.

100

Fig. 1B

## Description

### Technical Field

The present invention relates to a coordinate transformation device, a non-transitory computer readable medium storing a coordinate transformation program, and a coordinate transformation method.

### Background Art

Today, various navigation systems have been put into practice to monitor vehicles on earth. In order to manage the operation of aircraft whose travel distance is longer than other carriers, it is necessary to calculate the azimuth and distance of the aircraft in a wide area. Aircraft navigation systems are generally required to process large-scale spatial information accurately and effectively in a wide area such as a country's territory and air space, or a flight information region (FIR).

As an example of such navigation systems, a method for calculating a distance using piece-wise linear interpolation has been proposed (Patent Literature 1). In this method, the distance between two points is divided into segments of a certain length, and the distance of each segment is calculated. Further, a correction is made to the connecting part between the segments, which makes it possible to calculate the distance between two points. Accordingly, the calculation can be simplified and performed efficiently.

As another example of the navigation systems, a distance calculation method in which the shape of the earth (spheroid) is taken into consideration at a radio station tower located on land has been proposed (Patent Literature 2). In this method, a highly accurate distance calculation can be achieved within a line-of-sight distance from the radio station tower by performing a correction calculation in consideration of the spheroid shape.

### Citation List

#### Patent Literature

   [Patent Literature 1] Japanese Patent No. 4684333
   [Patent Literature 2] Japanese Unexamined Patent Application Publication No. 2012-85139

[Non Patent Literature]

[Non Patent Literature 1] "Chronological Scientific Tables 2012 (desk size)", edited by National Astronomical Observatory of Japan, MARUZEN PUBLISHING CO., LTD, Geography 3(581)

### Summary of Invention

#### Technical Problem

However, the inventor has found that the above-mentioned methods have the following problems. In the method disclosed in Patent Literature 1, a highly accurate distance calculation is achieved by using piece-wise linear interpolation. However, if two points to be compared are far away from each other, the number of segments between the two points increases. As a result, there is a problem that the processing efficiency deteriorates and calculation errors accumulate, leading to a large error in the calculation. In other words, this method is not suitable in principle for calculation of a distance between points which are far away from each other. Moreover, the method is not suitable for calculation of a shortest path.

Furthermore, the method disclosed in Patent Literature 2 has a problem that the method cannot be applied if the two points to be compared are far away and over the horizon. That is, the method cannot be applied to the calculation of a distance of, for example, an aircraft, over a wide area.

The present invention has been made in view of the above-mentioned circumstances, and an object of the present invention is to provide a coordinate transformation device, a non-transitory computer readable medium storing a coordinate transformation program, and a coordinate transformation method which are capable of calculating coordinates on a spheroid at a high speed and with a minimum error.

**Solution to Problem**

A coordinate transformation device according to an exemplary aspect of the present invention includes: storage means for storing information specifying a shape of a spheroid; information indicating coordinates on the spheroid described using the information specifying the shape of the spheroid; and information indicating a transformation parameter for transforming the information indicating coordinates on the spheroid into information indicating coordinates on a true sphere; and operation means for generating a formula for performing coordinate transformation processing by substituting the transformation parameter into a predetermined formula, transforming the information indicating coordinates on the spheroid into coordinates on the true sphere by substituting, into the generated formula, the information specifying the shape of the spheroid and the information indicating coordinates on the spheroid, and outputting the transformed information indicating coordinates on the true sphere.

A non-transitory computer readable medium storing a coordinate transformation program according to an exemplary aspect of the present invention causes a computer to execute processing including: reading information specifying a shape of a spheroid, information indicating coordinates on the spheroid described using the information specifying the shape of the spheroid, and information indicating a transformation parameter used for coordinate transformation processing; generating a formula for performing the coordinate transformation processing by substituting the transformation parameter into a predetermined formula; transforming the information indicating coordinates on the spheroid into information indicating coordinates on a true sphere by substituting, into the generated formula, the information specifying the shape of the spheroid and the information indicating coordinates on the spheroid; and outputting the transformed information indicating coordinates on the true sphere.

A coordinate transformation method according to an exemplary aspect of the present invention includes: generating a formula for performing coordinate transformation processing by substituting a transformation parameter into a predetermined formula, the transformation parameter being used for the coordinate transformation processing; substituting, into the generated formula, information specifying a shape of a spheroid and information indicating coordinates on the spheroid described using the information specifying the shape of the spheroid, and transforming the information indicating coordinates on the spheroid into information indicating coordinates on a true sphere; and outputting the transformed information indicating coordinates on the true sphere.

**Advantageous Effects of Invention**

According to the present invention, it is possible to provide a coordinate transformation device, a non-transitory computer readable medium storing a coordinate transformation program, and a coordinate transformation method which are capable of calculating coordinates on a spheroid at a high speed and with a minimum error.

**Brief Description of Drawings**

Fig. 1A is a block diagram schematically showing a configuration of a geographical information management device 100;
Fig. 1B is a block diagram schematically showing a basic configuration of the geographical information management device 100;
Fig. 2 is a flowchart schematically showing an operation of the geographical information management device 100;
Fig. 3 is a diagram showing a relationship between a spheroid EB in a WGS84 coordinate system and an object OBJ to be observed;
Fig. 4 is a diagram showing pieces of information included in a basic shape database D1;
Fig. 5 is a diagram showing pieces of information included in an airspace information database D2;
Fig. 6 is a diagram showing pieces of information included in a projection information database D4;
Fig. 7 is a graph showing a latitude line spacing ratio and a longitude line spacing ratio on the spheroid EB;
Fig. 8 is a diagram showing a relationship between a true sphere CB and the object OBJ to be observed;
Fig. 9 is a diagram showing pieces of information included in a parameter information database D3;
Fig. 10A is a graph showing the latitude dependence of a latitude line spacing ratio when a reference latitude $\theta_0$ is 36 degrees north latitude;
Fig. 10B is a graph showing the latitude dependence of a longitude line spacing ratio when the reference latitude $\theta_0$ is 36 degrees north latitude;
Fig. 11A is a graph showing the latitude dependence of an error rate Err $\theta$ of latitude line spacing and an error rate Err $\varphi$ of longitude line spacing when the reference latitude $\theta_0$ is the equator (0 degrees north latitude);
Fig. 11B is a graph showing the latitude dependence of the error rate Err $\theta$ of latitude line spacing and the error rate

Err φ of longitude line spacing when the reference latitude $\theta_0$ is the equator (18 degrees north latitude);

Fig. 11C is a graph showing the latitude dependence of the error rate Err θ of latitude line spacing and the error rate Err φ of longitude line spacing when the reference latitude $\theta_0$ is the equator (36 degrees north latitude);

Fig. 11D is a graph showing the latitude dependence of the error rate Err θ of latitude line spacing and the error rate Err φ of longitude line spacing when the reference latitude $\theta_0$ is the equator (54 degrees north latitude);

Fig. 11E is a graph showing the latitude dependence of the error rate Err θ of latitude line spacing and the error rate Err φ of longitude line spacing when the reference latitude $\theta_0$ is the north pole (90 degrees north latitude);

Fig. 12 is a table showing a latitude range in which the error rate Err φ of longitude line spacing is less than a maximum error of 0.01% in a plane rectangular coordinate system and a latitude range in which the error rate Err φ of longitude line spacing is less than 0.04% of errors at a standard meridian in the Universal Transverse Mercator projection, when the reference latitude is changed;

Fig. 13 is a graph showing the latitude dependence of the error rate Err θ of latitude line spacing and the error rate Err φ of longitude line spacing when the reference latitude $\theta_0$ is the equator (18 degrees north latitude);

Fig. 14 is a map showing a range in which the error rate Err φ of longitude line spacing is less than 0.01% and a range in which the error rate Err φ of longitude line spacing is less than 0.04% in the vicinity of Japan when a location at 35 degrees north latitude and 135 degrees east longitude is set as a reference;

Fig. 15 is a block diagram schematically showing a configuration of a geographical information management device 200;

Fig. 16 is a flowchart schematically showing a coordinate inverse transformation operation of the geographical information management device 200;

Fig. 17 is a diagram showing pieces of information included in a parameter information database D5;

Fig. 18 is a diagram showing a relationship between a point $P_1$ and a point $P_2$ on the true sphere CB;

Fig. 19A is a diagram showing an azimuth Ψ between the point $P_1$ and the point $P_2$ on the sphere CB;

Fig. 19B is a diagram showing a case where a plane PL2 shown in Fig. 19A is viewed from above;

Fig. 20 is a diagram showing a relationship between the point $P_1$ and the point $P_2$ on the true sphere CB;

Fig. 21 is a diagram showing a case where the azimuth from the point $P_1$ to the point $P_2$ on the true sphere CB is east;

Fig. 22 is a diagram showing a case where the azimuth from the point $P_1$ to the point $P_2$ on the true sphere CB is west;

Fig. 23 is a diagram showing a path C1 on the true sphere CB that is obtained by projecting a circle on the spheroid EB onto the true sphere CB;

Fig. 24 is a diagram showing a path C2 on the true sphere CB that is obtained by projecting an arc on the spheroid EB onto the true sphere CB when the direction from a start point to an end point of the arc is counterclockwise;

Fig. 25 is a diagram showing a path C3 on the true sphere CB that is obtained by projecting an arc on the spheroid EB onto the true sphere CB when the direction from a start point to an end point of the arc is clockwise;

Fig. 26 is a diagram showing a relationship between a reference path L and an offset line segment OL on the true sphere CB;

Fig. 27 is a diagram showing the vicinity of an inflection point of a continuous line segment;

Fig. 28 is a diagram showing the vicinity of an end of a reference line segment; and

Fig. 29 is a map showing an example of airspaces defined on the true sphere CB.

## Description of Embodiments

Exemplary embodiments of the present invention will be described below with reference to the drawings. In the drawings, the same elements are denoted by the same reference numerals, and a repeated explanation is omitted as necessary.

First Exemplary Embodiment

First, a geographical information management device 100 according to a first exemplary embodiment of the present invention will be described. The geographical information management device 100 is configured using a hardware resource such as a computer system.

In general, calculations for control and navigation of vehicles that travel above the earth, such as aircraft, require arithmetic processing by digitizing map information. However, the shape of the earth is not a true sphere but rather a spheroid which is compressed in the north-south direction and has a radius that is maximum in the vicinity of the equator. Accordingly, if the arithmetic processing is to be performed using coordinate values on the spheroid, a vast amount of complicated processing is required.

The geographical information management device 100 performs coordinate transformation processing for projecting coordinates on a spheroid as coordinates on a true sphere. The arithmetic processing is performed using the projected coordinates on the true sphere, thereby simplifying the processing, speeding up the processing, and achieving the calculations for control and navigation of vehicles traveling above the earth, with small hardware resources. That is, the geographical information management device 100 is an example of a coordinate transformation device that is configured so as to be able to execute coordinate transformation processing.

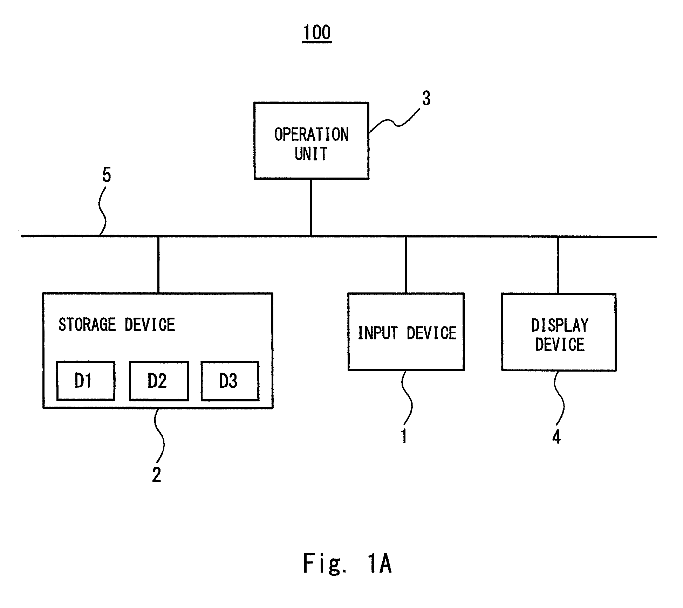

Fig. 1A is a block diagram schematically showing the configuration of the geographical information management device 100. The geographical information management device 100 includes an input device 1, a storage device 2, an operation unit 3, a display device 4, and a bus 5. The input device 1, the storage device 2, the operation unit 3, and the display device 4 are connected to each other via the bus 5, so that data can be delivered therebetween.

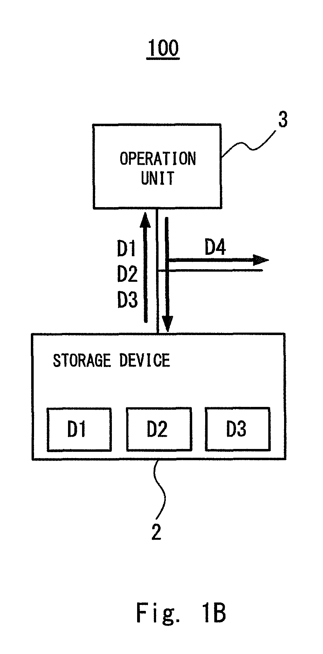

Fig. 1B is a block diagram schematically showing the basic configuration of the geographical information management device 100. In Fig. 1, the input device 1, the display device 4, and the bus 5 are illustrated to enable the overall configuration of the geographical information management device 100 to be understood. The basic configuration of the geographical information management device 100 can be illustrated as shown in Fig. 1B.

The input device 1 is used to input data to the geographical information management device 100 from the outside. As the input device 1, various data input means, such as a keyboard, a mouse, a DVD (Digital Versatile Disc) drive, and network connection, can be used.

The storage device 2 can store a database in which data provided through the input device 1 is stored, and can also store a program provided for processing in the operation unit 3. As the storage device 2, various storage devices, such as a hard disk drive and a flash memory, can be used. Specifically, the storage device 2 stores a basic shape database D1, an airspace information database D2, a parameter information database D3, and a projection information database D4.

The basic shape database D1 is preliminarily given specific information. The basic shape database D1 will be described in detail later.

The airspace information database D2 is, for example, information input through the input device 1, and includes coordinates of an aircraft to be monitored on the spheroid, and coordinate information about an airspace on the spheroid. The airspace information database D2 will be described in detail later.

The parameter information database D3 includes parameters for transforming coordinate information on the spheroid in the airspace information database D2 into coordinate information on the true sphere. In other words, the coordinates on the spheroid are projected onto the true sphere. The transformed coordinates on the true sphere are hereinafter referred to as projected coordinates.

The projection information database D4 includes projected coordinate information on the true sphere. The projection information database D4 includes, for example, a projection space database D41, a projection line segment database D42, and a projection point database D43. The projection space database D41 includes coordinate information specifying a predetermined three-dimensional space on the true sphere. The projection line segment database D42 includes coordinate information specifying a line segment that connects two points on the true sphere. The projection point database D43 includes coordinate information indicating a predetermined point on the true sphere.

The storage device 2 stores a coordinate transformation program PRG1 for specifying arithmetic processing for coordinate transformation.

The operation unit 3 can read out the program and database from the storage device 2, and can perform necessary arithmetic processing. The operation unit 3 consists of, for example, a CPU (Central Processing Unit).

The display device 4 displays the coordinates, flight information, and the like of an aircraft in a visible manner according to the operation result of the operation unit 3. As the display device 4, various display devices such as a liquid crystal display monitor can be used.

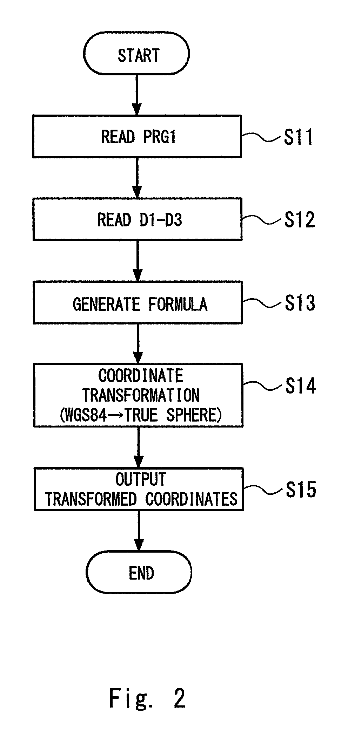

Next, an operation of the geographical information management device 100 will be described. Fig. 2 is a flowchart schematically showing an operation of the geographical information management device 100.

Step S11

First, the operation unit 3 reads out the coordinate transformation program PRG1. The coordinate transformation program PRG1 is a program for transforming coordinates on the spheroid into projected coordinates on the true sphere by using the basic shape database D1, the airspace information database D2, and the parameter information database D3. The coordinate transformation program PRG1 is read out from, for example, the storage device 2.

Step S12

Next, the operation unit 3 reads out the basic shape database D1, the airspace information database D2, and the parameter information database D3 from the storage device 2.

Step S13

The operation unit 3 generates a formula for performing coordinate transformation by substituting the information included in the basic shape database D1 and the parameter information database D3 into a formula specified by the coordinate transformation program PRG1.

Step S14

The operation unit 3 transforms coordinates on the spheroid into projected coordinates on the true sphere by substituting the coordinate information included in the airspace information database D2 into the generated formula. That is, the operation unit 3 transforms the airspace information database D2 into the projection information database D4. The coordinate transformation in Step S14 will be described in detail later.

Step S15

The operation unit 3 outputs to the outside the projected coordinates on the true sphere that are included in the projection information database D4. For example, the operation unit 3 outputs the projection information database D4 to the storage device 2.

After that, the operation unit 3 performs arithmetic processing necessary for control or navigation calculation of a vehicle, by using the projection information database D4. In this case, for example, the operation unit 3 reads out the program for specifying arithmetic processing from the storage device 2 and performs the arithmetic processing. For example, the operation unit 3 can calculate the azimuth and distance between points by using the projection information database D4, and can obtain an intersection between different line segments. For example, in the case of calculating the azimuth and distance between points, the operation unit 3 reads out an azimuth/distance calculation program from the storage device 2. In the case of obtaining an intersection between different line segments, the operation unit 3 reads out an intersection calculation program from the storage device 2. In the case of displaying these calculation results, the operation unit 3 reads out an image transformation program and processes the calculation results into a form that can be displayed. The information processed into a form that can be displayed is output to the display device 4.

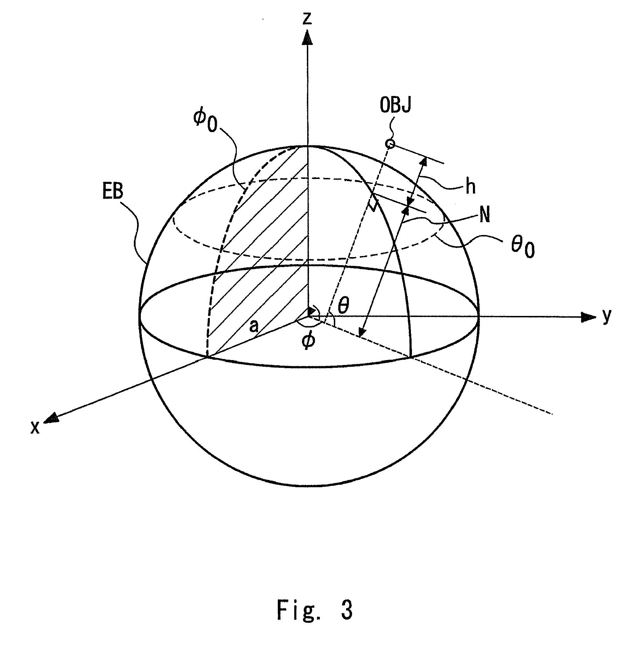

Next, a method for representing coordinates on the spheroid that are included in the airspace information database D2 will be described. Coordinates on the spheroid are represented by using, for example, a WGS84 coordinate system. Fig. 3 is a diagram showing a relationship between a spheroid EB and an object OBJ to be observed in the WGS84 coordinate system. In Fig. 3, the symbol "a" represents the equatorial radius of the spheroid EB. If the spheroid EB represents the earth, a=6,378,137 m holds. The symbol "h" represents the altitude of the object OBJ to be observed on the spheroid EB in the WGS84 coordinate system. The symbol "θ" represents the latitude of the object OBJ to be observed on the spheroid EB in the WGS84 coordinate system. The symbol "φ" represents the longitude of the object OBJ to be observed on the spheroid EB in the WGS84 coordinate system. The symbol "N" represents the radius of the spheroid EB at the current position of the object OBJ to be observed. The three-dimensional position of the object to be observed on the spheroid EB in the WGS84 coordinate system is represented by the following Formula (1):

$$x = (N + h)\cos\theta\cos\phi$$

$$y = (N + h)\cos\theta\sin\phi$$

$$z = \left(N\left(1 - e^2\right) + h\right)\sin\theta$$

$$e^2 = 2f - f^2$$

$$N = \frac{a}{\sqrt{\left(1 - e^2\sin^2\theta\right)}} \qquad \cdots (1)$$

where f represents flattening. If the spheroid EB represents the earth, f=1/298.257223563 holds. The symbol "e" represents eccentricity.

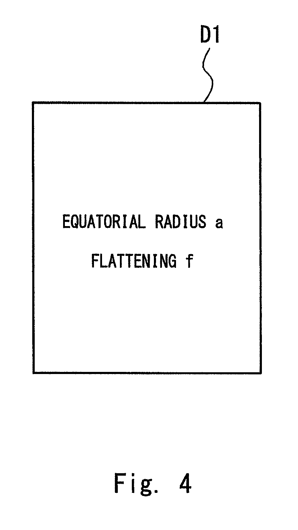

The basic shape database D1 will now be described in detail. The basic shape database D1 is preliminarily given specific information. Fig. 4 is a diagram showing pieces of information included in the basic shape database D1. The basic shape database D1 includes the equatorial radius a and the flattening f of the spheroid EB (the earth).

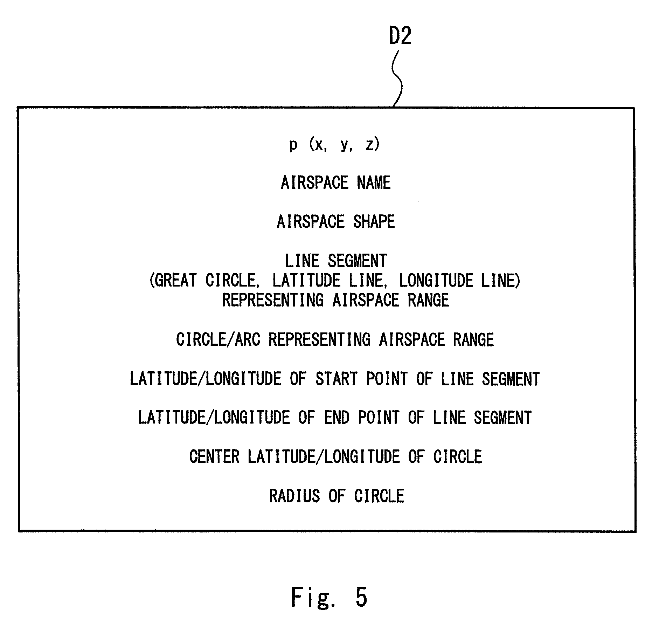

The airspace information database D2 will be described in detail. Fig. 5 is a diagram showing pieces of information included in the airspace information database D2. The airspace information database D2 includes pieces of information respectively indicating coordinates p (x, y, z) of an aircraft on the spheroid, a line segment (route) that connects two points, and the name, shape (circular, rectangular, etc.), and range of an airspace. The airspace information database D2 includes, for example, P (x, y, z), the latitude and longitude of a start point of a line segment, the latitude and longitude of an end point of a line segment, an airspace shape, a line segment (a great circle, a latitude line, and a longitude line) representing an airspace range, information about a circle or arc representing an airspace range, the center latitude and longitude for representing a circle, and the radius of the circle.

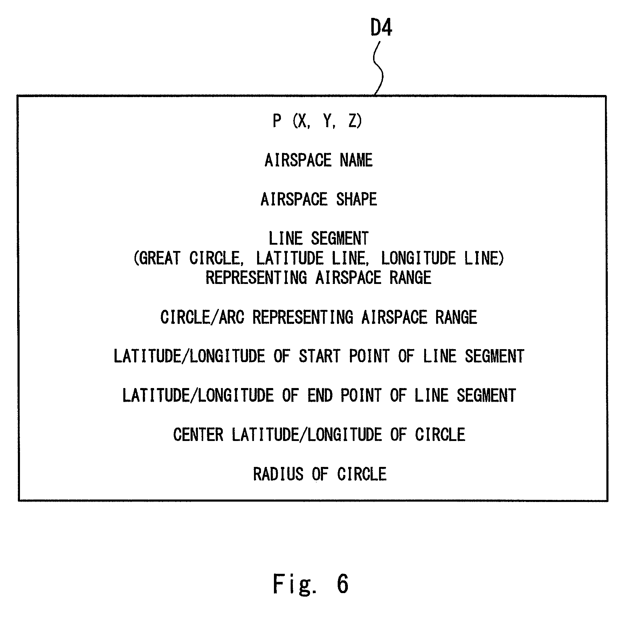

The projection information database D4 will be described in detail. Fig. 6 is a diagram showing pieces of information included in the projection information database D4. The projection information database D4 includes pieces of information respectively indicating coordinates P (X, Y, Z) on a true sphere CB that are obtained after transforming the coordinates p (x, y, z) of the aircraft on the spheroid, a line segment (route) that connects two points after the coordinate transformation, and the name, shape (circular, rectangular, etc.), and range of an airspace. The projection information database D4 includes, for example, P (X, Y, Z), the latitude and longitude of a start point of a line segment, the latitude and longitude of an end point of a line segment, an airspace shape, a line segment (a great circle, a latitude line, and a longitude line) representing an airspace range, information about a circle or arc representing an airspace range, the center latitude and longitude for representing a circle, and the radius of the circle.

Next, properties of latitude line spacing and longitude line spacing on the spheroid EB will be considered. In general, the latitude line spacing on the true sphere is constant. On the other hand, on the spheroid EB, at the altitude 0 (ground surface), the latitude line spacing is minimum in the vicinity of the equator and is maximum in the vicinity of the north pole or the south pole. A latitude line spacing $D_\theta$ at the ground surface on the spheroid EB in the WGS84 coordinate system is represented by the following Formula (2) based on Formula (1).

$$\frac{\partial x}{\partial \theta} = \frac{\partial N}{\partial \theta} \cos\theta \cos\phi - N\sin\theta \cos\varphi$$

$$= \frac{ae^2 \sin\theta \cos^2\theta \cos\phi}{\sqrt{\left(1-e^2\sin^2\theta\right)^3}} - \frac{a\sin\theta \cos\phi}{\sqrt{\left(1-e^2\sin^2\theta\right)}}$$

$$= \frac{a\sin\theta \cos\phi}{\sqrt{\left(1-e^2\sin^2\theta\right)^3}} \left(e^2\cos^2\theta - 1 + e^2\sin^2\theta\right)$$

$$= \frac{-a\left(1-e^2\right)\sin\theta \cos\phi}{\sqrt{\left(1-e^2\sin^2\theta\right)^3}}$$

$$\frac{\partial y}{\partial \theta} = \frac{-a\left(1-e^2\right)\sin\theta \sin\phi}{\sqrt{\left(1-e^2\sin^2\theta\right)^3}}$$

$$\frac{\partial z}{\partial \theta} = \frac{\partial N}{\partial \theta}\left(1-e^2\right)\sin\theta + N\left(1-e^2\right)\cos\theta$$

$$= \frac{ae^2\left(1-e^2\right)\sin^2\theta \cos\theta}{\sqrt{\left(1-e^2\sin^2\theta\right)^3}} + \frac{a\left(1-e^2\right)\cos\theta}{\sqrt{\left(1-e^2\sin^2\theta\right)}}$$

$$= \frac{a\left(1-e^2\right)\cos\theta}{\sqrt{\left(1-e^2\sin^2\theta\right)^3}} \left(e^2\sin^2\theta + 1 - e^2\sin^2\theta\right)$$

$$= \frac{a\left(1-e^2\right)\cos\theta}{\sqrt{\left(1-e^2\sin^2\theta\right)^3}}$$

$$D_\theta = \sqrt{\left\{\left(\frac{\partial x}{\partial \theta}\right)^2 + \left(\frac{\partial y}{\partial \theta}\right)^2 + \left(\frac{\partial z}{\partial \theta}\right)^2\right\}}$$

$$= \frac{a\left(1-e^2\right)}{\sqrt{\left(1-e^2\sin^2\theta\right)^3}} \qquad \cdots (2)$$

Next, the longitude line spacing will be considered. The longitude line spacing on the true sphere is in proportion to the cosine of the latitude. At the altitude 0 (ground surface), the longitude line spacing takes a minimum value "a" at the equator and takes a minimum value "0" at the north pole or the south pole. The same holds true for the spheroid EB. A longitude line spacing $D_\varphi$ at the ground surface on the true sphere and on the spheroid EB in the WGS84 coordinate system is represented by the following Formula (3) based on Formula (1).

$$\frac{\partial x}{\partial \phi} = -N \cos\theta \sin\phi$$

$$\frac{\partial y}{\partial \phi} = N \cos\theta \cos\phi$$

$$\frac{\partial z}{\partial \phi} = 0$$

$$D_\phi = \sqrt{\left\{\left(\frac{\partial x}{\partial \phi}\right)^2 + \left(\frac{\partial y}{\partial \phi}\right)^2 + \left(\frac{\partial z}{\partial \phi}\right)^2\right\}}$$

$$= N \cos\theta$$

$$= \frac{a \cos\theta}{\sqrt{\left(1 - e^2 \sin^2\theta\right)}} \qquad \cdots (3)$$

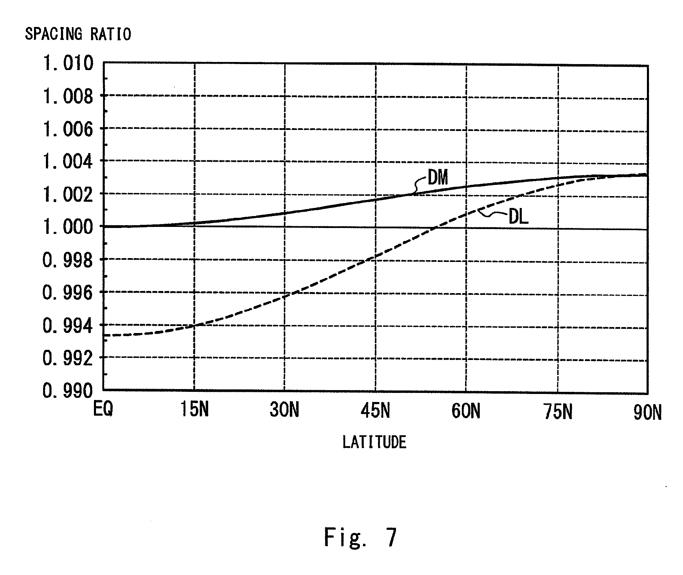

Fig. 7 is a graph showing a latitude line spacing ratio and a longitude line spacing ratio on the spheroid EB. In this case, a latitude line spacing ratio DL is a value obtained by dividing the latitude line spacing by the equatorial radius a. The longitude line spacing ratio DM is a value obtained by dividing the longitude line spacing by the equatorial radius a and a cosine $\cos\theta$. As shown in Fig. 7, it can be understood that the latitude line spacing ratio increases toward the north pole from the equator, and that the longitude line spacing ratio also increases toward the north pole from the equator.

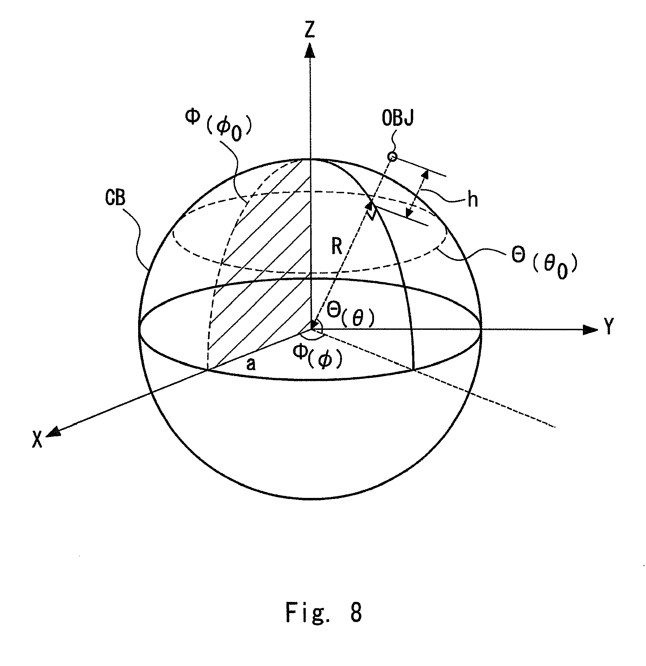

A method for representing projected coordinates on the true sphere included in the projection information database D4 will be described. Fig. 8 is a diagram showing a relationship between the true sphere CB and the object OBJ to be observed. In Fig. 8, R represents the radius of the true sphere CB; h represents an altitude of the object OBJ to be observed on the true sphere CB; $\Theta$ ($\theta$) represents a function of the latitude $\theta$ on the spheroid EB in the WGS84 coordinate system and indicates a projected latitude on the true sphere CB; and $\Phi$ ($\varphi$) represents a function of the longitude $\varphi$ on the spheroid EB in the WGS84 coordinate system and indicates a projected longitude on the true sphere CB. The three-dimensional position (X, Y, Z) of the object OBJ to be observed on the true sphere CB is represented by the following Formula (4) by using three-dimensional polar coordinates.

$$X = (R + h)\cos\Theta \cos\Phi$$

$$Y = (R + h)\cos\Theta \sin\Phi \qquad \cdots (4)$$

$$Z = (R + h)\sin\Theta$$

When Formula (4) is compared with Formula (1), it can be understood that the projected coordinates on the true sphere CB can be expressed in the form of a simpler function than that of the coordinates on the spheroid EB.

A latitude line spacing $\Delta_\theta$ at the ground surface on the true sphere is represented by the following Formula (5) based on Formula (4).

$$\frac{\partial X}{\partial \theta} = -R\frac{\partial \Theta}{\partial \theta}\sin\Theta\cos\Phi$$

$$\frac{\partial Y}{\partial \theta} = -R\frac{\partial \Theta}{\partial \theta}\sin\Theta\sin\Phi$$

$$\frac{\partial Z}{\partial \theta} = R\frac{\partial \Theta}{\partial \theta}\cos\Theta$$

$$\Delta_\theta = \sqrt{\left\{\left(\frac{\partial X}{\partial \theta}\right)^2 + \left(\frac{\partial Y}{\partial \theta}\right)^2 + \left(\frac{\partial Z}{\partial \theta}\right)^2\right\}}$$

$$= R\frac{\partial \Theta}{\partial \theta} \qquad\qquad \cdots (5)$$

A longitude line spacing $\Delta_\varphi$, at the ground surface on the true sphere is represented by the following Formula (6) based on Formula (4).

$$\frac{\partial X}{\partial \phi} = -R\frac{\partial \Phi}{\partial \phi}\cos\Theta\sin\Phi$$

$$\frac{\partial Y}{\partial \phi} = R\frac{\partial \Theta}{\partial \theta}\cos\Theta\cos\Phi$$

$$\frac{\partial Z}{\partial \phi} = 0$$

$$\Delta_\phi = \sqrt{\left\{\left(\frac{\partial X}{\partial \phi}\right)^2 + \left(\frac{\partial Y}{\partial \phi}\right)^2 + \left(\frac{\partial Z}{\partial \phi}\right)^2\right\}}$$

$$= R\frac{\partial \Phi}{\partial \phi}\cos\Theta \qquad\qquad \cdots (6)$$

In this exemplary embodiment, coordinates on the spheroid EB in the WGS84 coordinate system described above are transformed into projected coordinates that are projected on the true sphere CB. Transformation parameters for transforming coordinates on the spheroid EB in the WGS84 coordinate system described above into projected coordinates on the true sphere CB will be described below.

In order to project the spheroid EB onto the true sphere CB with as small a distortion as possible, it is necessary that the latitude line spacing $D_\theta$ on the spheroid EB and the latitude line spacing $\Delta_\theta$ on the true sphere CB be equal ($\Delta_\theta = D_\theta$) at the altitude h=0 and at a reference latitude $\theta_0$. Accordingly, the following Formula (7) is obtained by Formulas (2) and (5).

$$R\left(\frac{\partial \Theta}{\partial \theta}\right)_{\theta_0} = \frac{a\left(1-e^2\right)}{\sqrt{\left(1-e^2\sin^2\theta_0\right)^3}} \qquad \cdots (7)$$

In order to project the spheroid EB onto the true sphere CB with as small a distortion as possible, it is necessary that the longitude line spacing $D_\varphi$ on the spheroid EB and the longitude line spacing $\Delta_\varphi$ on the true sphere CB be equal ($\Delta_\varphi = D_\varphi$) at the altitude h=0 and at the reference latitude $\theta_0$. Accordingly, the following Formula (8) is obtained by Formulas (3) and (6).

$$R\left(\frac{\partial \Phi}{\partial \phi}\cos \Theta\right)_{\theta_0} = \frac{a\cos\theta_0}{\sqrt{\left(1 - e^2 \sin^2 \theta_0\right)}} \quad \cdots (8)$$

It is necessary that a primary change rate in the latitude direction of the latitude line spacing on the spheroid EB and a primary change rate in the latitude direction of the latitude line spacing on the true sphere CB be equal at the reference latitude $\theta_0$. Accordingly, the following Formula (9) is obtained by Formulas (2) and (5).

$$\frac{\partial \Delta_\theta}{\partial \theta} = \frac{\partial D_\theta}{\partial \theta}$$

$$R\frac{\partial^2 \Theta}{\partial \theta^2} = \frac{3a\left(1 - e^2\right)e^2 \sin\theta \cos\theta}{\sqrt{\left(1 - e^2 \sin^2 \theta\right)^5}}$$

$$\theta = \theta_0$$

$$R\left(\frac{\partial^2 \Theta}{\partial \theta^2}\right)_{\theta_0} = \frac{3a\left(1 - e^2\right)e^2 \sin\theta_0 \cos\theta_0}{\sqrt{\left(1 - e^2 \sin^2 \theta_0\right)^5}} \quad \cdots (9)$$

It is necessary that a primary change rate in the latitude direction of the longitude line spacing on the spheroid EB and a primary change range in the latitude direction of the longitude line spacing on the true sphere CB be equal at the reference latitude $\theta_0$. Accordingly, the following Formula (10) is obtained by Formulas (3) and (6).

$$\frac{\partial \Delta_\phi}{\partial \theta} = \frac{\partial D\phi}{\partial \theta}$$

$$-R\left(\frac{\partial \Phi}{\partial \phi}\right)\left(\frac{\partial \Theta}{\partial \theta}\sin\Theta\right) = \frac{-a\sin\theta}{\sqrt{\left(1-e^2\sin^2\theta\right)}} + \frac{ae^2\sin\theta\cos^2\theta}{\sqrt{\left(1-e^2\sin^2\theta\right)^3}}$$

$$= \frac{-a\sin\theta}{\sqrt{\left(1-e^2\sin^2\theta\right)^3}}\left(1-e^2\sin^2\theta - e^2\cos^2\theta\right)$$

$$= \frac{-a(1-e^2)\sin\theta}{\sqrt{\left(1-e^2\sin^2\theta\right)^3}}$$

$$\theta = \theta_0$$

$$R\left(\frac{\partial \Phi}{\partial \phi}\right)_{\theta_0}\left(\frac{\partial \Theta}{\partial \theta}\sin\Theta\right)_{\theta_0} = \frac{a(1-e^2)\sin\theta_0}{\sqrt{\left(1-e^2\sin^2\theta_0\right)^3}} \qquad \cdots (10)$$

Assume that a secondary change rate in the latitude direction of the longitude line spacing on the spheroid EB and a secondary change rate in the latitude direction of the longitude line spacing on the true sphere CB are equal at the reference latitude $\theta_0$. Accordingly, the following Formula (11) is obtained by Formulas (3) and (6).

$$\frac{\partial^2 \Delta_\phi}{\partial \theta^2} = \frac{\partial^2 D\phi}{\partial \theta^2}$$

$$-R\left(\frac{\partial \Phi}{\partial \phi}\right)\left\{\left(\frac{\partial^2 \Theta}{\partial \theta^2}\right)\sin \Theta + \left(\frac{\partial \Theta}{\partial \theta}\right)^2 \cos \Theta\right\} = \frac{-a\left(1-e^2\right)\cos\theta}{\sqrt{\left(1-e^2\sin^2\theta\right)^3}} - \frac{3a\left(1-e^2\right)e^2\sin^2\theta\cos\theta}{\sqrt{\left(1-e^2\sin^2\theta\right)^5}}$$

$$= \frac{-a\left(1-e^2\right)\cos\theta}{\sqrt{\left(1-e^2\sin^2\theta\right)^5}}\left(1-e^2\sin^2\theta + 3e^2\sin^2\theta\right)$$

$$= \frac{-a\left(1-e^2\right)\cos\theta}{\sqrt{\left(1-e^2\sin^2\theta\right)^5}}\left(1+2e^2\sin^2\theta\right)$$

$$\theta = \theta_0$$

$$R\left(\frac{\partial \Phi}{\partial \phi}\right)_{\theta_0}\left\{\left(\frac{\partial^2 \Theta}{\partial \theta^2}\right)\sin \Theta + \left(\frac{\partial \Theta}{\partial \theta}\right)^2 \cos \Theta\right\}_{\theta_0} = \frac{a\left(1-e^2\right)\cos\theta_0}{\sqrt{\left(1-e^2\sin^2\theta_0\right)^5}}\left(1+2e^2\sin^2\theta_0\right)$$

$$\cdots (1\ 1)$$

Transformation parameters are calculated as follows by using the above formulas. First, a transformation parameter Pr for transforming the equatorial radius a of the spheroid EB in the WGS84 coordinate system into the radius R of the true sphere CB is calculated. The following Formula (12) is first obtained from Formulas (7), (9), and (10).

Formula (12)=Formula (10)×Formula (9)/Formula (7), that is:

$$R\left(\frac{\partial \Phi}{\partial \phi}\right)_{\theta_0}\left(\frac{\partial^2 \Theta}{\partial \theta^2}\sin \Theta\right)_{\theta_0} = \frac{3a(1-e^2)e^2\sin^2\theta_0\cos\theta_0}{\sqrt{\left(1-e^2\sin^2\theta_0\right)^5}} \qquad \cdots (1\ 2)$$

Formula (12) is equal to the first term on the left side of Formula (11).

The following Formula (13) is obtained from Formulas (1) and (2).

Formula (13)=Formula (2)×{Formula (1)}$^2$/$R^2$, that is:

$$R\left(\frac{\partial \Phi}{\partial \phi}\right)_{\theta_0}\left(\left(\frac{\partial \Theta}{\partial \theta}\right)^2 \cos \Theta\right)_{\theta_0} = \frac{a^3\left(1-e^2\right)^2\cos\theta_0}{R^2\sqrt{\left(1-e^2\sin^2\theta_0\right)^7}} \qquad \cdots (1\ 3)$$

Formula (13) is equal to the second term on the left side of Formula (11).

Accordingly, by substituting Formulas (12) and (13) into Formula (11), the transformation parameter Pr for transforming the equatorial radius a of the spheroid EB in the WGS84 coordinate system into the radius R of the true sphere CB can be calculated as shown in the following Formula (14).

$$\frac{a\left(1-e^2\right)\cos\theta_0}{\sqrt{\left(1-e^2\sin^2\theta_0\right)^5}}\left(1+2e^2\sin^2\theta_0\right)=\frac{3a\left(1-e^2\right)e^2\sin^2\theta_0\cos\theta_0}{\sqrt{\left(1-e^2\sin^2\theta_o\right)^5}}+\frac{a^3\left(1-e^2\right)^2\cos\theta_0}{R^2\sqrt{\left(1-e^2\sin^2\theta_0\right)^7}}$$

$$\Leftrightarrow 1+2e^2\sin^2\theta_0=3e^2\sin^2\theta_0+\frac{a^2\left(1-e^2\right)}{R^2\left(1-e^2\sin^2\theta_0\right)}$$

$$\Leftrightarrow 1-e^2\sin^2\theta_0=\frac{a^2\left(1-e^2\right)}{R^2\left(1-e^2\sin^2\theta_0\right)}$$

$$\Leftrightarrow \left(R/a\right)^2=\frac{1-e^2}{\left(1-e^2\sin^2\theta_0\right)^2}$$

$$\therefore\quad R/a=\mathrm{Pr}=\frac{\sqrt{\left(1-e^2\right)}}{\left(1-e^2\sin^2\theta_0\right)}\qquad\qquad\cdots(1\ 4)$$

Next, a transformation parameter for transforming the longitude φ on the spheroid EB into the projected longitude Φ on the true sphere CB is calculated. The following Formula (15) is first obtained by Formula (8).
Formula (15)=Formula (8)×{Formula (1)}$^2$/R, that is:

$$\left(\frac{\partial\Phi}{\partial\phi}\cos\Theta\right)_{\theta_0}=\frac{(a/R)\cos\theta_0}{\sqrt{\left(1-e^2\sin^2\theta_0\right)}}\qquad\qquad\cdots(1\ 5)$$

The following Formula (16) is obtained by substituting Formula (14) into Formula (15).

$$\left(\frac{\partial\Phi}{\partial\phi}\cos\Theta\right)_{\theta_0}=\frac{\sqrt{\left(1-e^2\sin^2\theta_0\right)}}{\sqrt{\left(1-e^2\right)}}\cos\theta_0\qquad\qquad\cdots(1\ 6)$$

Next, the following Formula (17) is obtained by Formulas (7) and (10).
Formula (17)=Formula (10)/Formula (7), that is:

$$\left(\frac{\partial\Phi}{\partial\phi}\sin\Theta\right)_{\theta_0}=\sin\theta_o\qquad\qquad\cdots(1\ 7)$$

The following Formula (18) is obtained by Formulas (16) and (17).
Formula (18)={Formula (16)}$^2$+{Formula (17)}$^2$, that is:

$$\left(\frac{\partial\Phi}{\partial\phi}\right)^2_{\theta_0}=\left(\frac{\partial\Phi}{\partial\phi}\cos\Theta\right)^2_{\theta_0}+\left(\frac{\partial\Phi}{\partial\phi}\sin\Theta\right)^2_{\theta_0}=\frac{\left(1-e^2\sin^2\theta_0\right)\cos^2\theta_0}{1-e^2}+\sin^2\theta_0\qquad\cdots(1\ 8)$$

Accordingly, a transformation parameter $\lambda_\varphi$, for transforming the longitude φ on the spheroid EB represented by the following Formula (19) into the projected longitude $\Phi$ on the true sphere CB is obtained by Formula (18).

$$\lambda_\phi = \left(\frac{\partial \Phi}{\partial \phi}\right)_{\theta_0} = \sqrt{\frac{1 - e^2 \sin^2 \theta_0 (1 + \cos^2 \theta_0)}{1 - e^2}} \qquad \cdots (1\,9)$$

Therefore, the projected longitude $\Phi$ is represented by the following Formula (20).

$$\Phi = \lambda_\phi\left(\phi - \phi_0\right) \qquad \cdots (2\,0)$$

The coordinate transformation in Step S14 will be described in detail below. A method for transforming the reference latitude $\theta_0$ on the spheroid EB into a projection reference latitude $\Theta_0$ on the true sphere CB will be described. The following Formula (21) is obtained by Formulas (16) and (17).
Formula (21)=Formula (17)/Formula (16), that is:

$$(\tan \Theta)_{\theta_0} = \frac{\sqrt{1 - e^2}}{\sqrt{1 - e^2 \sin^2 \theta_0}} \tan \theta_0 \qquad \cdots (2\,1)$$

Therefore, the projection reference latitude $\Theta_0$ is represented by the following Formula (22).

$$\Theta_0 = \tan^{-1}\left(\frac{\sqrt{1 - e^2}}{\sqrt{1 - e^2 \sin^2 \theta_0}} \tan \theta_0\right) \qquad \cdots (2\,2)$$

A method for transforming the latitude $\theta$ on the spheroid EB into the projected latitude $\Theta$ on the true sphere will be described. In order to project the spheroid EB onto the true sphere CB with as small a distortion as possible, a condition is set in which the latitude line spacing $D_\theta$ on the spheroid EB and the latitude line spacing $\Delta_\theta$ on the true sphere CB are equal at the altitude h=0 and at a given latitude $\theta$ (equal latitude line spacing condition). In this case, Formula (7) is transformed to obtain the following Formula (23).

$$R\left(\frac{\partial \Theta}{\partial \theta}\right) = \frac{a\left(1 - e^2\right)}{\sqrt{\left(1 - e^2 \sin^2 \theta\right)^3}} \qquad \cdots (2\,3)$$

Formula (23) is transformed to obtain the following Formula (24).
Note that the above-mentioned set condition is merely an example. It is also possible to set other conditions, such as a condition in which the longitude line spacing $D_\varphi$ on the spheroid EB and the longitude line spacing $\Delta_\varphi$ on the true sphere CB are equal ($\Delta_\varphi = D_\varphi$) at a given latitude $\theta$; a condition in which an area on the spheroid EB and an area on the true sphere CB are equal (equivalent) at a given latitude $\theta$; and a condition in which a direction on the spheroid EB and a direction on the true sphere CB coincide with each other (conformal) at a given latitude $\theta$.

$$\Theta = \left(a/R\right)\int \frac{\left(1 - e^2\right)}{\sqrt{\left(1 - e^2 \sin^2 \theta\right)^3}} \ d\theta$$

$$= \frac{a\left(1 - e^2\right)}{R} \Pi(e^2; \theta, e) + C \qquad \cdots (2\,4)$$

where $\Pi$ represents an elliptic integral of the third kind.

In the actual coordinate transformation, the operation using an ellipse function is complicated. Accordingly, the use of an approximation using Helmert's expansion (for example, Non Patent Literature 1) facilitates the coordinate transformation. A calculation using Helmert's expansion will be described below. A third flattening n is defined by the following Formula (25) using the flattening f.

$$n = \frac{f}{2-f} \qquad \cdots (2\,5)$$

Approximation (26) of Formula (24) is obtained by using Formula (25).

$$\Theta \approx \frac{a}{(1+n)\mathrm{R}}\left\{ \begin{array}{l} \left(1+\dfrac{n^2}{4}+\dfrac{n^4}{64}\right)\theta - \dfrac{3}{2}\left(n-\dfrac{n^3}{8}\right)\sin 2\theta \\[4mm] + \dfrac{15}{16}\left(n^2-\dfrac{n^4}{4}\right)\sin 4\theta - \dfrac{35}{48}n^3\sin 6\theta + \dfrac{315}{512}n^4\sin 8\theta \end{array} \right\}+C \qquad \cdots (2\,6)$$

Here, coefficients in each term on the right side of Formula (26) are respectively defined as the following Formulas (27A) to (27F).

$$\lambda_\theta = \frac{a}{(1+n)\mathrm{R}}\left(1+\frac{n^2}{4}+\frac{n^4}{64}\right) \qquad \cdots (2\,7\,\mathrm{A})$$

$$\lambda_2 = \frac{-3a}{2(1+n)\mathrm{R}}\left(n-\frac{n^3}{8}\right) \qquad \cdots (2\,7\,\mathrm{B})$$

$$\lambda_4 = \frac{15a}{16(1+n)\mathrm{R}}\left(n^2-\frac{n^4}{4}\right) \qquad \cdots (2\,7\,\mathrm{C})$$

$$\lambda_6 = \frac{-35an^3}{48(1+n)\mathrm{R}} \qquad \cdots (2\,7\,\mathrm{D})$$

$$\lambda_8 = \frac{315an^4}{512(1+n)\mathrm{R}} \qquad \cdots (2\,7\,\mathrm{E})$$

$$\lambda_0 = \Theta_0 - \left(\lambda_\theta\theta_0 + \lambda_2\sin 2\theta_0 + \lambda_4\sin 4\theta_0 + \lambda_6\sin 6\theta_0 + \lambda_8\sin 8\theta_0\right) \qquad \cdots (2\,7\,\mathrm{F})$$

Formula (26) is transformed by using Formulas (27A) to (27F), and the projected latitude $\Theta$ on the true sphere CB is represented by the following Formula (28).

$$\Theta(\theta) = \lambda_\theta\theta + \lambda_2\sin 2\theta + \lambda_4\sin 4\theta + \lambda_6\sin 6\theta + \lambda_8\sin 8\theta + \lambda_0 \qquad \cdots (2\,8)$$

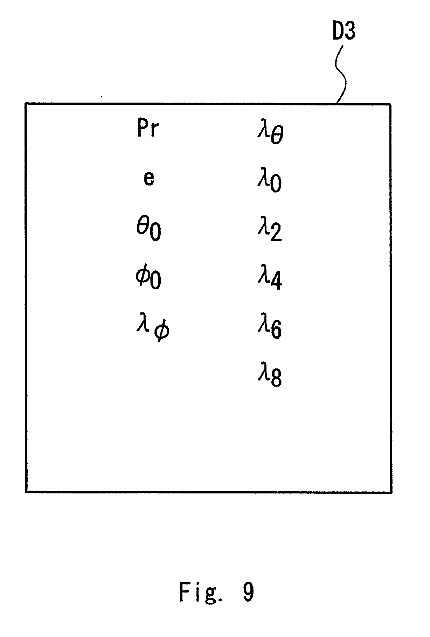

The parameter information database D3 will be described in detail based on the above-mentioned calculation results of correction parameters. Fig. 9 is a diagram showing pieces of information included in the parameter information database D3. The parameter information database D3 includes the parameter Pr for calculating the radius R of the true sphere CB, the eccentricity e, the reference latitude $\theta_0$, the reference longitude $\varphi_0$, the transformation parameter $\lambda_\varphi$ represented by Formula (20), and the transformation parameters $\lambda_\theta$, $\lambda_0$, $\lambda_2$, $\lambda_4$, $\lambda_6$, and $\lambda_8$ which are respectively represented by Formulas (27A) to (27E). This enables the operation unit 3 to obtain the correction parameters necessary for transforming the airspace information database D2 into the projection information database D4.

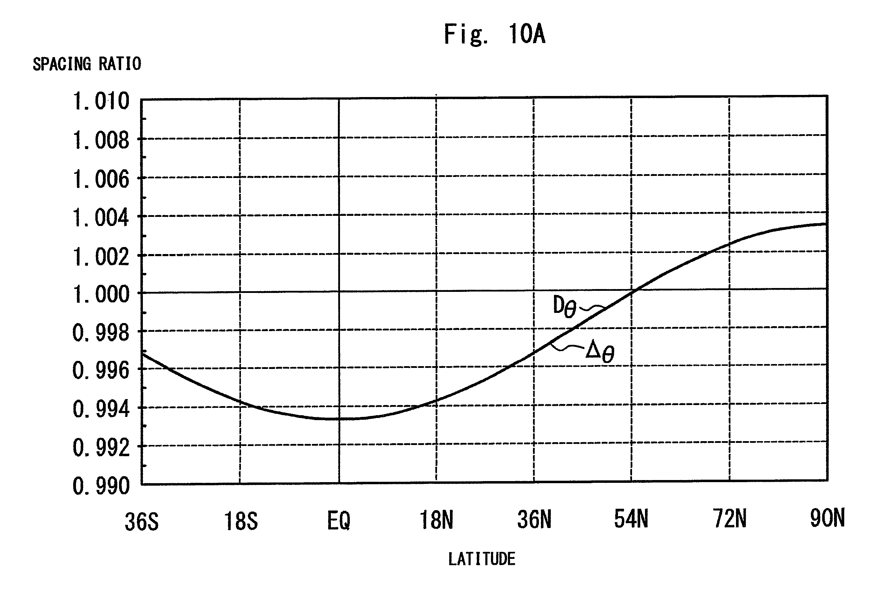

Next, a change in the latitude line spacing will be described. Fig. 10A is a graph showing the latitude dependence of a latitude line spacing ratio when the reference latitude $\theta_0$ is 36 degrees north latitude. The spacing ratio shown in Fig. 10A is defined in the same manner as in Fig. 7. In Fig. 10A, a line represented by $D_\theta$ indicates a latitude line spacing obtained by dividing the value obtained by Formula (2) by the equatorial radius a, and a line represented by $\Delta_\theta$ indicates a latitude line spacing obtained by dividing the value obtained by Formulas (5) and (28) by the equatorial radius a. Hereinafter, when the latitude is shown in each graph, "N" is added to the end of the number representing the north latitude and "S" is added to the end of the number representing the south latitude. The equator is represented by "EQ".

The three-dimensional positions of two points in a projection coordinate system on the true sphere CB facilitate the calculation of a distance d between a point $P_1$ and a point $P_2$ on the ground surface at the altitude h=0. However, to facilitate a subsequent numerical calculation, normalization vectors are used in Formulas (29) to (31).

The position of the point $P_1$ is represented by the following Formula (29) based on Formula (4).

$$P_1 = \left(X_1, Y_1, Z_1\right)$$
$$X_1 = \cos\Theta_1 \cos\Phi_1$$
$$Y_1 = \cos\Theta_1 \sin\Phi_1$$
$$Z_1 = \sin\Theta_1 \qquad \cdots (29)$$

The position of the point $P_2$ is represented by the following Formula (30) based on Formula (4).

$$P_2 = \left(X_2, Y_2, Z_2\right)$$
$$X_2 = \cos\Theta_2 \cos\Phi_2$$
$$Y_2 = \cos\Theta_2 \sin\Phi_2$$
$$Z_2 = \sin\Theta_2 \qquad \cdots (30)$$

Therefore, the distance d between the point $P_1$ and the point $P_2$ is represented by the following Formula (31).

$$d = R\cos^{-1}\left(\left(P_1 \cdot P_2\right)\right) \qquad \cdots (31)$$

This corresponds to the distance calculation formula (following Formula (32)) in spherical trigonometry.

$$d = R\cos^{-1}\left(\sin\Theta_1 \sin\Theta_2 + \cos\Theta_1 \cos\Theta_2 \cos\left(\Phi_2 - \Phi_1\right)\right) \qquad \cdots (32)$$

As shown in Fig. 10A, the latitude dependence of a latitude line spacing $D_\Theta$ on the spheroid EB and the latitude dependence of a latitude line spacing $\Delta_\Theta$ at the projected coordinates match each other. That is, it can be understood that there is almost no error in the projected coordinates in the latitude direction (north-south direction).

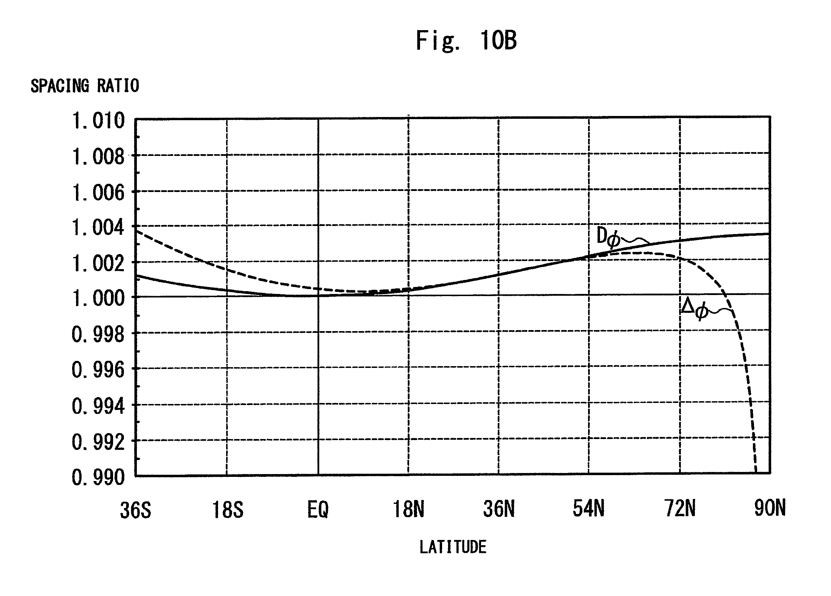

Next, a change in the longitude line spacing will be described. Fig. 10B is a graph showing the latitude dependence of the longitude line spacing ratio when the reference latitude $\theta 0$ is 36 degrees north latitude. The spacing ratio shown in Fig. 10B is defined in the same manner as in Fig. 7. In Fig. 10B, a line represented by $D_\varphi$ indicates a longitude line spacing obtained by dividing the value obtained by Formula (3) by the equatorial radius a and the cosine $\cos\theta$, and a line represented by $\Delta_\varphi$ indicates a longitude line spacing obtained by dividing the value obtained by Formulas (6), (19), and (28) by the equatorial radius a and the cosine $\cos\theta$. It can be understood that the latitude dependence of the longitude line spacing $D_\varphi$ in the WGS84 coordinate system and the latitude dependence of the longitude line spacing

$\Delta_\varphi$ at the projected coordinates substantially match each other within a range from 14 degrees north latitude to 55 degrees north latitude when the reference latitude $\theta_0$ is 36 degrees north latitude.

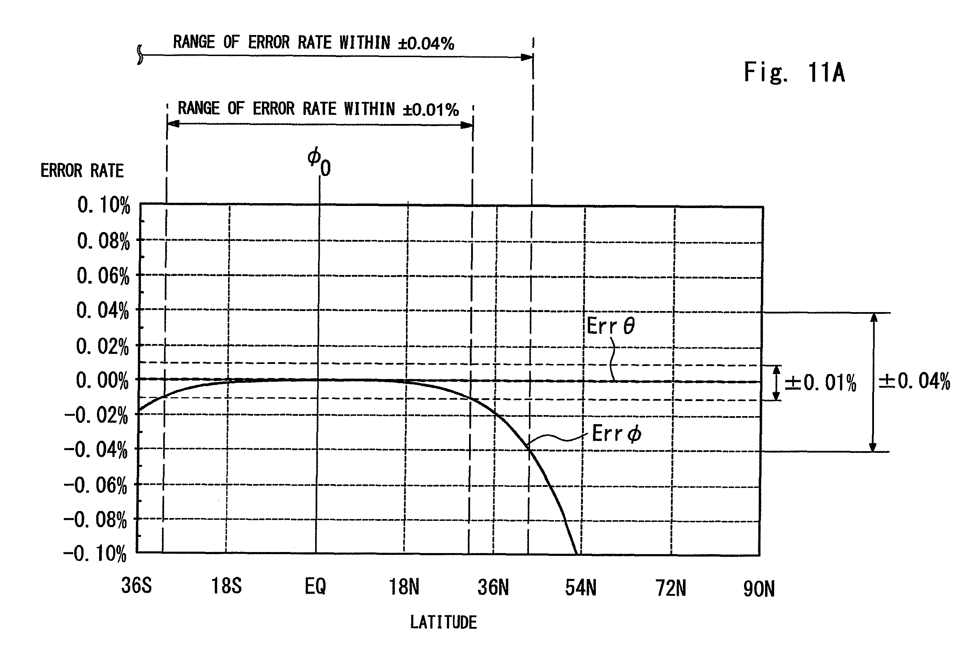

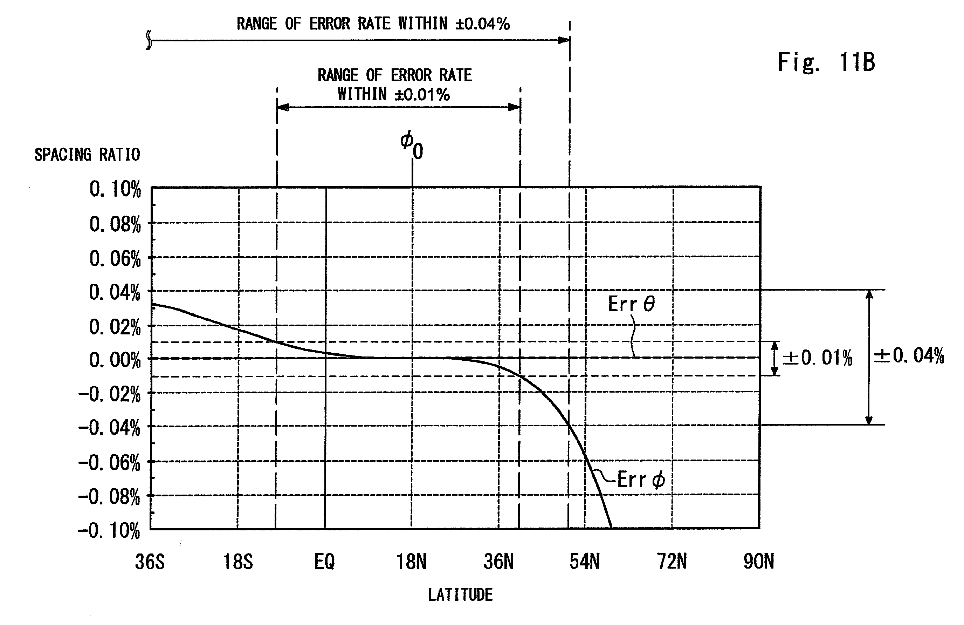

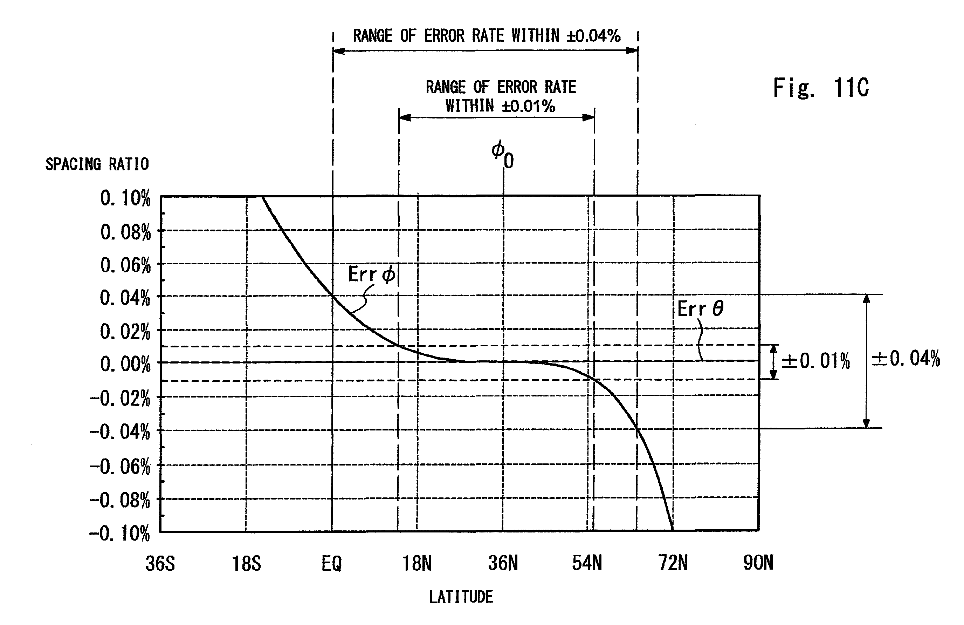

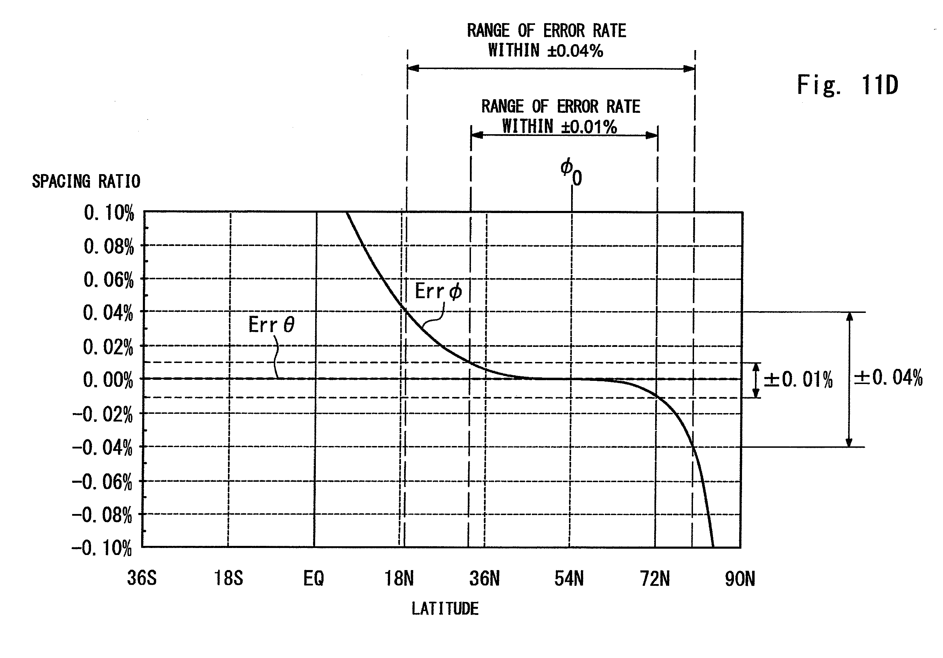

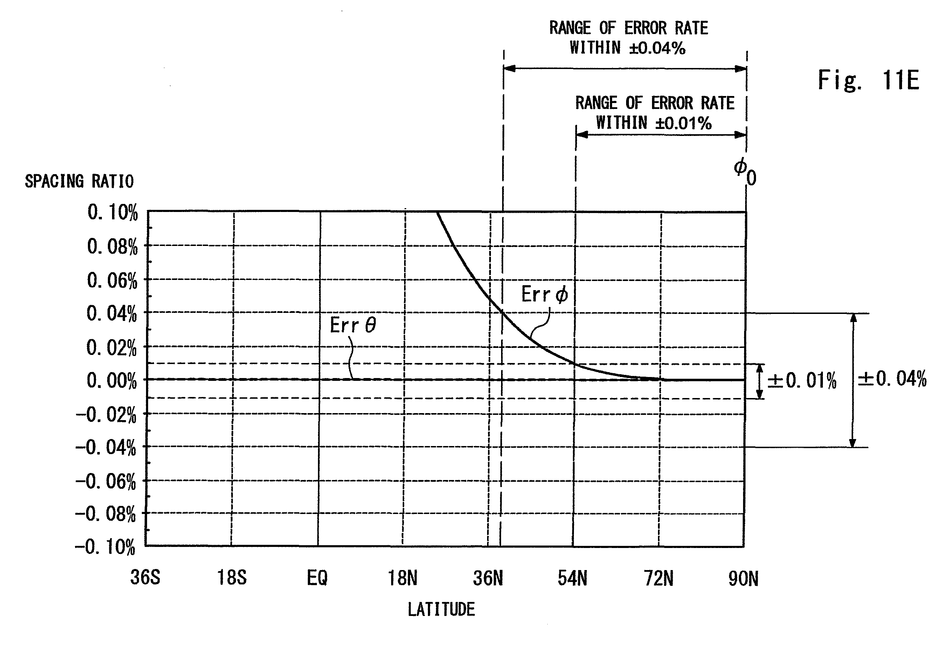

Next, an error rate of each of latitude line spacing and longitude line spacing when the reference latitude $\theta_0$ is changed will be described. The term "error rate" herein used refers to a value indicating how far the projected latitude line spacing and projected longitude line spacing obtained after the transformation is from the latitude line spacing and longitude line spacing on the spheroid EB. Fig. 11A is a graph showing the latitude dependence of the error rate Err$\theta$ of latitude line spacing and the error rate Err $\varphi$ of longitude line spacing when the reference latitude $\theta_0$ is the equator (0 degrees north latitude). Fig. 11B is a graph showing the latitude dependence of the error rate Err$\theta$ of latitude line spacing and the error rate Err$\varphi$ of longitude line spacing when the reference latitude $\theta_0$ is 18 degrees north latitude. Fig. 11C is a graph showing the latitude dependence of the error rate Err$\theta$ of latitude line spacing and the error rate Err$\varphi$ of longitude line spacing when the reference latitude $\theta_0$ is 36 degrees north latitude. Fig. 11D is a graph showing the latitude dependence of the error rate Err$\theta$ of latitude line spacing and the error rate Err$\varphi$ of longitude line spacing when the reference latitude $\theta_0$ is 54 degrees north latitude. Fig. 11E is a graph showing the latitude dependence of the error rate Err$\theta$ of latitude line spacing and the error rate Err$\varphi$ of longitude line spacing when the reference latitude $\theta_0$ is the north pole (90 degrees north latitude). The error rate Err$\theta$ of latitude line spacing is obtained by dividing the difference between $\Delta_\theta$ and $D_\theta$ by $D_\theta$. The error rate Err$\varphi$ of longitude line spacing is obtained by dividing the difference between $\Delta_\varphi$ and $D_\varphi$ by $D_\varphi$.

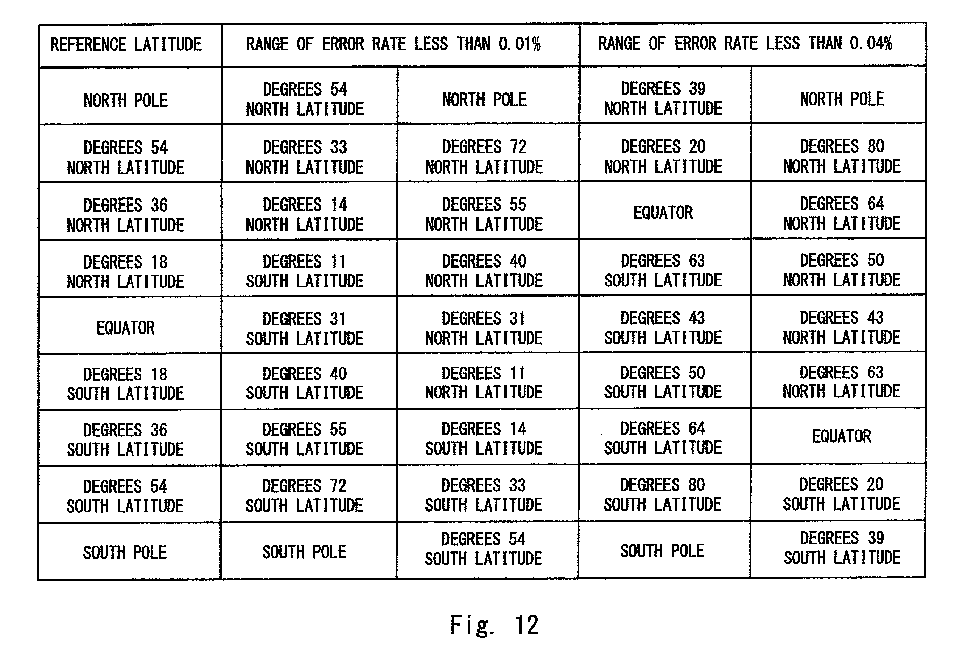

As described above, the error rate Err$\theta$ of latitude line spacing is sufficiently small at each reference latitude. However, the generation mode of the error rate Err$\varphi$ of longitude line spacing is changed by changing the reference latitude $\theta_0$. Fig. 12 is a table showing a latitude range in which the error rate Err$\varphi$ of longitude line spacing is less than a maximum error of 0.01% in a plane rectangular coordinate system and a latitude range in which the error rate Err$\varphi$ of longitude line spacing is less than 0.04% of errors at a standard meridian in the Universal Transverse Mercator projection, when the reference latitude is changed. As shown in Fig. 12, the error rate Err$\varphi$ of longitude line spacing can be suppressed to a sufficiently small value in a wide latitude range of about several tens of degrees.

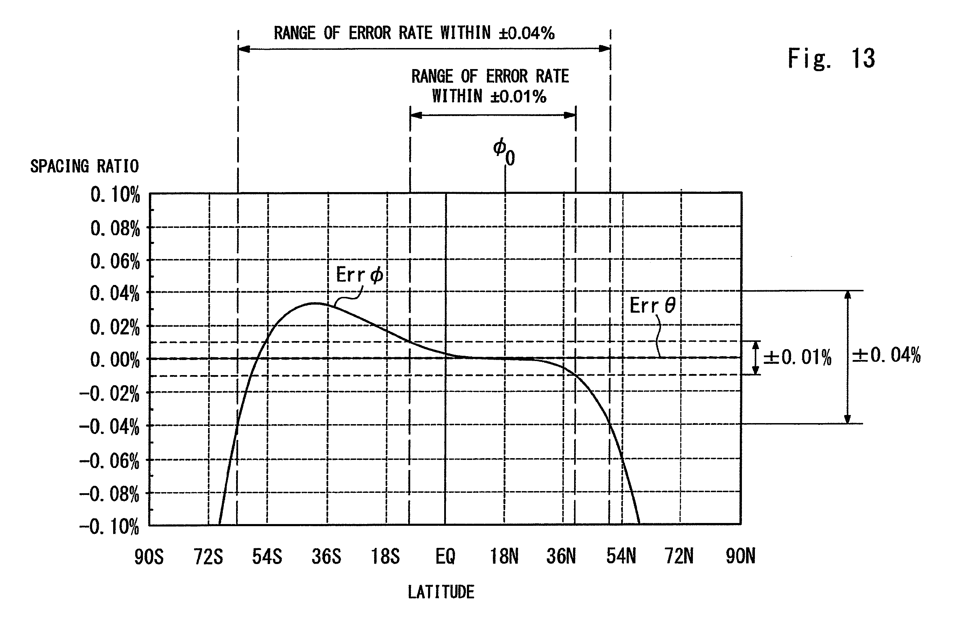

Note that as shown in Fig. 12, the range in which the error rate Err$\varphi$ of longitude line spacing is less than 0.04% when the reference latitude $\theta_0$ is 18 degrees north latitude is wide, and the southern limit is 63 degrees south latitude. Fig. 13 is a graph showing the latitude dependence of the error rate Err$\theta$ of latitude line spacing and the error rate Err$\varphi$ of longitude line spacing when the reference latitude $\theta_0$ is 18 degrees north latitude. It is considered that this is because the cubic term with respect to the latitude $\theta$ that is dominant at a high latitude and the quartic term with respect to the latitude $\theta$ that appears at a low latitude are antagonistic. This phenomenon is considered to occur also when the reference latitude $\theta_0$ is 18 degrees north latitude as shown in in Fig. 12.

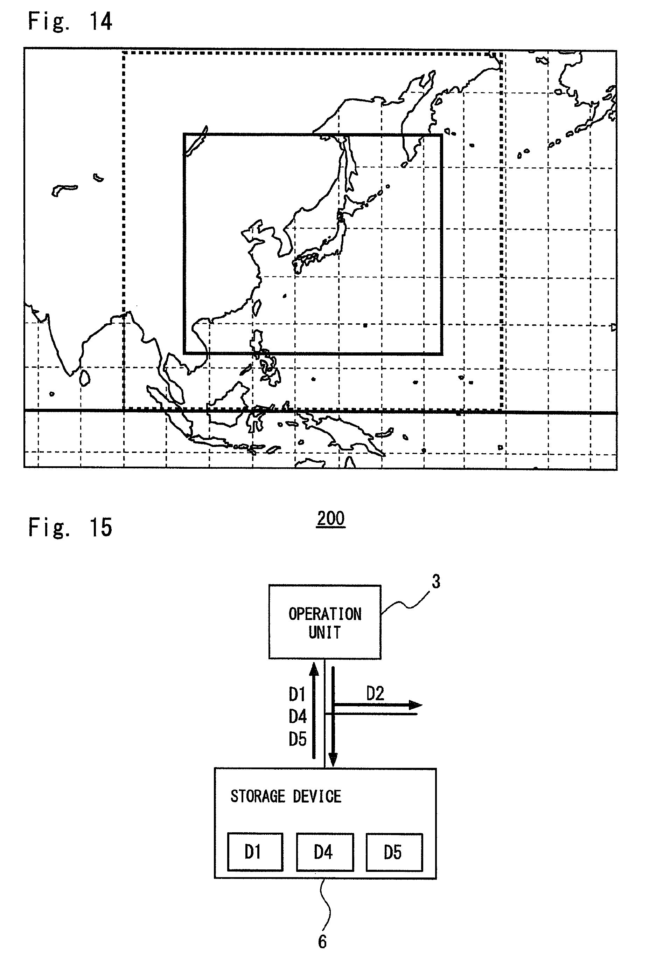

If the reference latitude $\theta_0$ is 35 degrees north latitude, the error rate Err$\varphi$ of longitude line spacing is less than 0.01% in a range from 13 degrees north latitude to 54 degrees north latitude, and the error rate Err$\varphi$ of longitude line spacing is less than 0.04% in a range from the equator (0 degrees north latitude) to 63 degrees north latitude. Fig. 14 is a map showing a range in which the error rate Err$\varphi$ of longitude line spacing is less than 0.01% and a range in which the error rate Err$\varphi$ of longitude line spacing is less than 0.04% in the vicinity of Japan when a location at 35 degrees north latitude and 135 degrees east longitude is set as a reference. In Fig. 14, the range in which the error rate Err$\varphi$ of longitude line spacing is less than 0.01% is indicated by a solid line and the range in which the error rate Err$\varphi$ of longitude line spacing is less than 0.04% is indicated by a dashed line. In Fig. 14, the longitude range is set to be substantially equal to the latitude range, but the longitude range is not limited to this. Except for the case where the reference latitude $\theta_0$ is the north pole or the south pole, the value of the correction coefficient $\lambda_\varphi$ in the longitude direction is different from 1. Accordingly, if an airline flies around the earth in the east-west direction, it does not return to the starting point. Therefore, it is desirable that the longitude range be about $\pm90$ degrees at maximum with respect to the reference longitude.

As shown in Fig. 14, the use of the coordinate transformation method according to this exemplary embodiment makes it possible to transform coordinates on the spheroid EB into projected coordinates on the true sphere CB with an error rate of less than 0.01% in a wide area that covers the territory and air space of Japan.

Furthermore, the use of the coordinate transformation method according to this exemplary embodiment makes it possible to transform coordinates on the spheroid EB into coordinates on the true sphere CB with an error rate of less than 0.04% in a wide area ranging from the equator to the central Siberia in the north-south direction and from the Indian Ocean to the central Pacific Ocean in the east-west direction.

In a case where the geographical information management device 100 according to this exemplary embodiment is mounted in, for example, an airliner, if correction parameters are calculated by determining an appropriate reference latitude and an appropriate reference longitude, a relatively long-distance flight can be dealt with by performing the correction parameter calculation once, in view of a flight leg of a typical airliner.

For example, a flight starting from London will be considered. Flights from London to Tokyo or New York can be achieved with an error rate of 0.01% or less by performing the correction parameter calculation once. Flights from London to Rio de Janeiro can be achieved with an error rate of 0.04% or less by performing the correction parameter calculation once. In order to achieve flights from London to Rio de Janeiro with an error rate of 0.01% or less, it is necessary to calculate the correction parameters twice. The following table shows the latitude range of each operation route (flight leg), the reference latitude, and the error rate.

[Table 1]

| Departure Place | Destination | Latitude Range of Flight Leg | Applied Reference Latitude | Error Rate |
|---|---|---|---|---|
| EGLL London N51 :28:39 W000:27:41 | RJAA Tokyo(Narita) N35:45:50 E140:23:30 | N35-N71 | N54 | 0.01% or less |
| EGLL London N51 :28:39 W000:27:41 | KJFK New York N45:28:05 W073:44:29 | N42-N52 | N54 | 0.01% or less |
| EGLL London N51 :28:39 W000:27:41 | SBGL Rio de Janeiro S22:48:32 W043:14:37 | S23-N52 | S18 | 0.04% or less |
| | | | N36+EQ | 0.01% or less |

In the above table, the names of departure and destination airports are shown by ICAO (International Civil Aviation Organization) code. In the ICAO code, EGLL represents Heathrow Airport (London, England); RJAA represents New Tokyo International Airport (Narita Airport, Japan); John F. Kennedy International Airport (New York, U.S.A); and SBGL represents Antonio Carlos Jobim International Airport (Rio de Janeiro, Brazil).

On the other hand, in order to perform navigation computation with an error rate of less than 0.01% by using, for example, a map of orthonormal coordinates, it is necessary to perform a recalculation in about thirty minutes per degree. Thus, frequent calculations are required and a computer with high throughput is required to perform the calculations in vehicles such as airliners, which leads to an increase in size of the calculation system. Therefore, the navigation computation using a map of orthonormal coordinates is not realistic.

On the other hand, the geographical information management device 100 enables highly accurate coordinate transformation as described above by only calculating the correction parameters once every several hours. Therefore, the geographical information management device 100 can be easily mounted in vehicles, such as airlines, in which downsizing of the calculation system is required.

According to the above configuration, coordinates on the earth, which is a spheroid, can be projected onto a true sphere with a minimum error in an area larger than ever before. This enables the arithmetic processing using coordinate information to be performed on the true sphere on which mathematical processing can be easily performed. Consequently, the information about the operation of an aircraft can be accurately processed in a small device at a high speed.

Second Exemplary Embodiment

Next, a geographical information management device 200 according to a second exemplary embodiment of the present invention will be described. The geographical information management device 200 has a configuration in which the function of reversely transforming projected coordinates on the true sphere CB into coordinates of the WGS84 coordinate system on the spheroid EB is added to the geographical information management device 100 according to the first exemplary embodiment. Fig. 15 is a block diagram schematically showing the configuration of the geographical information management device 200. The geographical information management device 200 has a configuration in which the storage device 2 of the geographical information management device 100 is replaced by a storage device 6.

In the geographical information management device 100, the transformation of coordinates of the WGS84 coordinate system on the spheroid EB into projected coordinates on the true sphere CB has been described above so as to facilitate arithmetic processing using the coordinate information. However, in order for a pilot of an airliner in which the geographical information management device is mounted, for example, to use the information obtained by the arithmetic processing at the projected coordinates on the true sphere CB to operate the airliner, it is necessary to inversely transform the projected coordinates into the coordinates of the WGS84 coordinate system based on which the airliner is actually flying. Accordingly, the geographical information management device 200 has the function of inversely transforming projected coordinates on the true sphere CB into coordinates of the WGS84 coordinate system on the spheroid EB.

The storage device 6 has a configuration in which a parameter information database D5 is added to the storage device 2. To simplify the drawing, Fig. 15 shows only the databases necessary for understanding this exemplary embodiment.

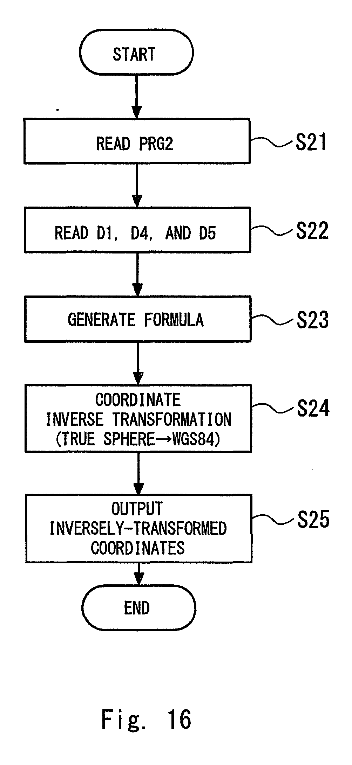

Next, the operation of the geographical information management device 200 will be described. Fig. 16 is a flowchart schematically showing the coordinate inverse transformation operation of the geographical information management device 200.

Step S21

First, the operation unit 3 reads out a coordinate inverse transformation program PRG2. The coordinate inverse transformation program PRG2 is a program that transforms projected coordinates on the true sphere into coordinates on the spheroid by using the basic shape database D1, the projection information database D4, and the parameter information database D5. The coordinate inverse transformation program PRG2 is read out from, for example, the storage device 6.

Step S22

Next, the operation unit 3 reads out the basic shape database D1, the projection information database D4, and the parameter information database D5.

Step S23

The operation unit 3 generates a formula for performing coordinate transformation by substituting the information included in the basic shape database D1 and the parameter information database D5 into a formula specified by the coordinate inverse transformation program PRG2.

Step S24

The operation unit 3 transforms coordinates on the true sphere into coordinates on the spheroid by substituting the projected coordinate information included in the projection information database D4 into the generated formula. In other words, the operation unit 3 inversely transforms the projection information database D4 into the airspace information database D2. The coordinate inverse transformation in Step S24 will be described in detail later.

Step S25

The operation unit 3 outputs the coordinates on the spheroid EB included in the airspace information database D2 to the outside. For example, the operation unit 3 outputs the airspace information database D2 to the storage device 2. Further, for example, the operation unit 3 processes the coordinate information included in the airspace information database D2 into a form that can be displayed, and outputs the processed coordinate information to the display device 4.

The coordinate inverse transformation in Step S24 will be described in detail below. Specifically, the projected longitude $\Phi$ on the true CB can be inversely transformed into the longitude $\varphi$ on the spheroid EB by the following Formula (33) which is obtained by transforming Formula (20).

$$\phi = \frac{\Phi}{\lambda_\phi} + \phi_0 \qquad \cdots (3\ 3)$$

Specifically, the projected latitude $\Theta$ on the true sphere CB can be inversely transformed into the latitude $\theta$ on the spheroid EB by Formulas (26) and (27). However, even when it is intended to obtain a function for inversely transforming the projected latitude $\Theta$ on the spheroid EB into the latitude on the true sphere CB from Formula (26), the function cannot be described by an elementary function. Accordingly, the latitude $\theta$ on the spheroid EB may be obtained by a numerical calculation using Formula (26). As the numerical calculation, for example, the so-called Newton-Raphson method can be used.

In the case of using the Newton-Raphson method, it is necessary that Formula (26) can be differentiated by the latitude $\theta$. A derivative $\Delta (\theta)$ of the function $\Theta (\theta)$ with respect to $\theta$ is represented by the following Formulas (34) and (35A) to (35E).

$$\Delta(\theta) = \delta_0 + \delta_2 \cos 2\theta + \delta_4 \cos 4\theta + \delta_6 \cos 6\theta + \delta_8 \cos 8\theta \qquad \cdots (3\ 4)$$

$$\delta_0 = \frac{a}{(1+n)R}\left(1 + \frac{n^2}{4} + \frac{n^4}{64}\right) \qquad \cdots (35\text{A})$$

$$\delta_2 = \frac{-3a}{(1+n)R}\left(n - \frac{n^3}{8}\right) \qquad \cdots (35\text{B})$$

$$\delta_4 = \frac{15a}{4(1+n)R}\left(n^2 - \frac{n^4}{4}\right) \qquad \cdots (35\text{C})$$

$$\delta_6 = \frac{-35an^3}{8(1+n)R} \qquad \cdots (35\text{D})$$

$$\delta_8 = \frac{315an^4}{64(1+n)R} \qquad \cdots (35\text{E})$$

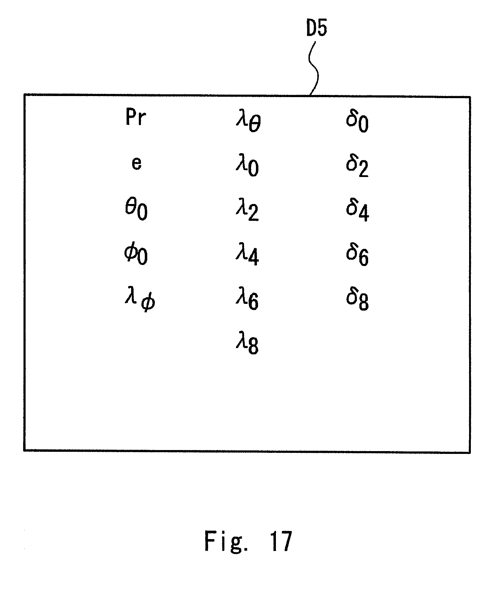

From the above formulas, it can be understood that the projected coordinates on the true sphere CB can be transformed into the coordinates on the spheroid EB by adding $\delta_0$ $\delta_2$, $\delta_4$, $\delta_6$, and $\delta_8$, which are respectively represented by Formulas (35A) to (35E), to the parameter information database. Specifically, the parameter information database D5 of this exemplary embodiment has a configuration in which $\delta_0$ to $\delta_8$ which are respectively represented by Formulas (35A) to (35E) are added to the parameter information database D3. Fig. 17 is a diagram showing pieces of information included in the parameter information database D5.

Note that the Newton-Raphson method is a general solution to equations by numerical calculation, and thus the detailed description thereof is omitted.

Third Exemplary Embodiment

Next, a geographical information management device 300 according to a third exemplary embodiment of the present invention will be described. The geographical information management device 300 has the same configuration as that of the geographical information management device 100 according to the first exemplary embodiment.

In the case of transforming the latitude θ on the spheroid EB into the projected latitude Θ on the true sphere CB, the condition in which the latitude line spacing $D_\theta$ on the spheroid EB and the latitude line spacing $\Delta_\theta$ on the true sphere CB are equal ($\Delta_\theta = D_\theta$) at the altitude h=0 and at a given latitude θ (equal latitude line spacing condition) is set in the geographical information management device 100. On the other hand, in the geographical information management device 300, a condition in which the longitude line spacing $D_\varphi$ on the spheroid EB and the longitude line spacing $\Delta_\varphi$ on the true sphere CB are equal ($\Delta_\varphi = D_\varphi$) at the altitude h=0 and at a given latitude θ (equal longitude line spacing condition) is set. In this case, the following Formula (36) is obtained by transforming Formula (8).

$$R\frac{\partial \Phi}{\partial \phi}\cos\Theta = \frac{a\cos\theta}{\sqrt{(1 - e^2\sin^2\theta)}} \qquad \cdots (36)$$

Formula (36) is transformed by using Formula (20), to thereby obtain the following Formula (37).

$$R\lambda_\phi\cos\Theta = \frac{a\cos\theta}{\sqrt{(1 - e^2\sin^2\theta)}} \qquad \cdots (37)$$

By Formula (37), the projected latitude Θ can be expressed as the following Formula (38).

$$\Theta = \cos^{-1}\left(\frac{a\cos\theta}{R\lambda_\phi\sqrt{\left(1-e^2\sin^2\theta\right)}}\right) \qquad \cdots (3\,8)$$

Other calculations for transforming the latitude θ on the spheroid EB into the projected latitude Θ on the true sphere CB are similar to those of the first exemplary embodiment, and thus a description thereof is omitted.

In view of the above, it can be understood that even in the case where the condition in which the longitude line spacing $D_\phi$ on the spheroid EB and the longitude line spacing $\Delta_\phi$ on the true sphere CB are equal ($\Delta_\phi=D_\phi$) at the altitude h=0 and at a given latitude θ (equal longitude line spacing condition) is set, the spheroid EB can be projected onto the true sphere CB with as small a distortion as possible.

Fourth Exemplary Embodiment

Next, a geographical information management device 400 according to a fourth exemplary embodiment of the present invention will be described. The geographical information management device 400 has the same configuration as that of the geographical information management device 100 according to the first exemplary embodiment.

In the case of transforming the latitude θ on the spheroid EB into the projected latitude Θ on the true sphere CB, the condition in which the latitude line spacing $D_\theta$ on the spheroid EB and the latitude line spacing $\Delta_\theta$ on the true sphere CB are equal ($\Delta_\theta=D_\theta$) at the altitude h=0 and at a given latitude θ (equal latitude line spacing condition) is set in the geographical information management device 100. On the other hand, in the geographical information management device 400, a condition in which an area $D_\theta D_\phi$ formed by the latitude line spacing and the longitude line spacing on the spheroid EB and an areas $\Delta_\theta\Delta_\phi$ formed by the latitude line spacing and the longitude line spacing on the true sphere CB are equal ($\Delta_\theta\Delta_\phi=D_\theta D_\phi$) at the altitude h=0 and at a given latitude θ (equivalence condition) is set. In this case, Formulas (7) and (8) are transformed to obtain the following Formula (39).

$$R^2\left(\frac{\partial\Theta}{\partial\theta}\right)\frac{\partial\Phi}{\partial\phi}\cos\Theta = \frac{a^2\left(1-e^2\right)\cos\theta}{\left(1-e^2\sin^2\theta\right)^2} \qquad \cdots (3\,9)$$

Formula (39) is transformed by using Formula (20), to thereby obtain the following Formula (40).

$$R^2\lambda_\varphi\left(\cos\Theta\frac{\partial\Theta}{\partial\theta}\right) = \frac{a^2\left(1-e^2\right)\cos\theta}{\left(1-e^2\sin^2\theta\right)^2} \qquad \cdots (4\,0)$$

By Formula (40), the projected latitude Θ can be expressed as the following Formula (41).

$$R^2\lambda_\varphi\int\cos\Theta\,d\Theta = a^2\left(1-e^2\right)\int\frac{\cos\theta}{\left(1-e^2\sin^2\theta\right)^2}\,d\theta$$

$$2R^2\lambda_\varphi\sin\Theta = a^2\left(1-e^2\right)\left(\frac{\sin\theta}{1-e^2\sin^2\theta} + \frac{\tanh^{-1}\left(e\sin\theta\right)}{e}\right)+C$$

$$\Theta = \sin^{-1}\left(\frac{a^2\left(1-e^2\right)}{2R^2\lambda_\varphi}\left(\frac{\sin\theta}{1-e^2\sin^2\theta} + \frac{\tanh^{-1}\left(e\sin\theta\right)}{e} - \frac{\sin\theta_0}{1-e^2\sin^2\theta_0} - \frac{\tanh^{-1}\left(e\sin\theta_0\right)}{e}\right)+\sin\Theta_0\right)$$

$$\cdots (4\,1)$$

Other calculations for transforming the latitude θ on the spheroid EB into the projected latitude Θ on the true sphere CB are similar to those of the first exemplary embodiment, and thus a description thereof is omitted.

In view of the above, it can be understood that even in the case where the condition in which the area $D_\theta D_\varphi$ formed by the latitude line spacing and the longitude line spacing on the spheroid EB and the area $\Delta_\theta \Delta_\varphi$ formed by the latitude line spacing and the longitude line spacing on the true sphere CB are equal ($\Delta_\theta \Delta_\varphi = D_\theta D_\varphi$) at the altitude h=0 and at a given latitude $\theta$ (equivalence condition) is set, the spheroid EB can be projected onto the true sphere CB with as small a distortion as possible.

Fifth Exemplary Embodiment

Next, a geographical information management device 500 according to a fifth exemplary embodiment of the present invention will be described. The geographical information management device 500 has the same configuration as that of the geographical information management device 100 according to the first exemplary embodiment.

In the case of transforming the latitude $\theta$ on the spheroid EB into the projected latitude $\Theta$ on the true sphere CB, the condition in which the latitude line spacing $D_\theta$ on the spheroid EB and the latitude line spacing $\Delta_\theta$ on the true sphere CB are equal ($\Delta_\theta = D_\theta$) at the altitude h=0 and at a given latitude $\theta$ (equal latitude line spacing condition) is set in the geographical information management device 100. On the other hand, in the geographical information management device 500, a condition in which an angle $D_\theta / D_\varphi$ formed by the latitude line spacing and the longitude line spacing on the spheroid EB and an angle $\Delta_\theta / \Delta_\varphi$ formed by the latitude line spacing and the longitude line spacing on the true sphere CB are equal ($\Delta_\theta \Delta_\varphi = D_\theta / D_\varphi$) at the altitude h=0 and at a given latitude $\theta$ (conformal condition) is set. In this case, Formulas (7) and (8) are transformed to obtain the following Formula (42).

$$\left(\frac{\partial \Theta}{\partial \theta}\right)\left(1 - e^2 \sin^2 \theta\right)\cos \theta = \left(1 - e^2\right)\frac{\partial \Phi}{\partial \phi}\cos \Theta \qquad \cdots (42)$$

Formula (42) is transformed by using Formula (20), to thereby obtain the following Formula (43).

$$\left(\frac{\partial \Theta}{\partial \theta}\right)\left(1 - e^2 \sin^2 \theta\right)\cos \theta = \left(1 - e^2\right)\lambda_\varphi \cos \Theta \qquad \cdots (43)$$

By Formula (43), the projected latitude $\Theta$ is defined as the following Formula (44).

$$\int \frac{d\Theta}{\cos \Theta} = \left(1 - e^2\right)\lambda_\varphi \int \frac{d\theta}{\left(1 - e^2 \sin^2 \theta\right)\cos \theta}$$

$$\log\left(\frac{1 + \sin \Theta}{1 - \sin \Theta}\right) = e\lambda_\varphi \log(\frac{1 - e\sin \theta}{1 + e\sin \theta}) + \lambda_\varphi \log\left(\frac{1 + \sin \theta}{1 - \sin \theta}\right) + C$$

$$\log\left(\frac{1 + \sin \Theta}{1 - \sin \Theta}\right) - \log\left(\frac{1 + \sin \Theta_0}{1 - \sin \Theta_0}\right) =$$

$$e\lambda_\varphi \log(\frac{1 - e\sin \theta}{1 + e\sin \theta}) - e\lambda_\varphi \log(\frac{1 - e\sin \theta_0}{1 + e\sin \theta_0}) + \lambda_\varphi \log\left(\frac{1 + \sin \theta}{1 - \sin \theta}\right) - \lambda_\varphi \log\left(\frac{1 + \sin \theta_0}{1 - \sin \theta_0}\right)$$

$$\frac{(1 + \sin \Theta)}{(1 - \sin \Theta)} = \frac{(1 + \sin \Theta_0)}{(1 - \sin \Theta_0)}\left\{\frac{(1 - e\sin \theta)(1 + e\sin \theta_0)}{(1 + e\sin \theta)(1 - e\sin \theta_0)}\right\}^{e\lambda_\varphi}\left\{\frac{(1 + \sin \theta)(1 - \sin \theta_0)}{(1 - \sin \theta)(1 + \sin \theta_0)}\right\}^{\lambda_\varphi}$$

$$\cdots (44)$$

Other calculations for transforming the latitude $\theta$ on the spheroid EB into the projected latitude $\Theta$ on the true

sphere CB are similar to those of the first exemplary embodiment, and thus a description thereof is omitted.

In view of the above, it can be understood that even in the case where the condition in which the angle $D_\theta/D_\varphi$ formed by the latitude line spacing and the longitude line spacing on the spheroid EB and the angle $\Delta_\theta/\Delta_\varphi$ formed by the latitude line spacing and the longitude line spacing on the true sphere CB are equal ($\Delta_\theta\Delta_\varphi=D_\theta/D_\varphi$) at the altitude h=0 and at a given latitude $\theta$ is set, the spheroid EB can be projected with as small a distortion as possible.

Sixth Exemplary Embodiment

Next, a geographical information management device 600 according to a sixth exemplary embodiment of the present invention will be described. The geographical information management device 600 has the same configuration as that of the geographical information management device 100 according to the first exemplary embodiment.

In the case of transforming the latitude $\theta$ on the spheroid EB into the projected latitude $\Theta$ on the true sphere CB, the condition in which the latitude line spacing $D_\theta$ on the spheroid EB and the latitude line spacing $\Delta_\theta$ on the true sphere CB are equal ($\Delta_\theta=D_\theta$) at the altitude h=0 and at a given latitude $\theta$ (equal latitude line spacing condition) is set in the geographical information management device 100. On the other hand, in the geographical information management device 600, a condition in which a function $D_\theta f(D_\varphi)$ of the latitude line spacing and the longitude line spacing on the spheroid EB and a function $\Delta_\theta f(\Delta_\varphi)$ of the latitude line spacing and the longitude line spacing on the true sphere CB are equal at the altitude h=0 and at a given latitude $\theta$ is set. In this case, Formulas (7) and (8) are transformed to obtain the following Formula (45).

$$D_\theta f(D_\varphi) = \Delta_\theta f(\Delta_\varphi)$$

$$\frac{a(1-e^2)}{\sqrt{(1-e^2\sin^2\theta)^3}} f(\frac{a\cos\theta}{\sqrt{(1-e^2\sin^2\theta)}}) = R\left(\frac{\partial\Theta}{\partial\theta}\right) f(R\left(\frac{\partial\Phi}{\partial\varphi}\right)\cos\Theta)$$

$$\frac{a(1-e^2)}{\sqrt{(1-e^2\sin^2\theta)^3}} f(\frac{a\cos\theta}{\sqrt{(1-e^2\sin^2\theta)}}) = R\left(\frac{\partial\Theta}{\partial\theta}\right) f(R\lambda_\varphi\cos\Theta) \qquad \cdots (45)$$

Assuming that primitive functions are respectively represented by $F_D$ and $F_\Delta$ (especially, when f represents a rational function, the integration can be analytically performed without fail), the relationship between the latitude $\theta$ on the spheroid EB and the projected latitude $\Theta$ on the true sphere CB is defined as the following Formula (46).

$$aF_D(\theta) - aF_D(\theta_0) = RF_\Delta(\Theta) - RF_\Delta(\Theta_0) \qquad \cdots (46)$$

Other calculations for transforming the latitude $\theta$ on the spheroid EB into the projected latitude $\Theta$ on the true sphere CB are similar to those of the first exemplary embodiment, and thus a description thereof is omitted.

In view of the above, it can be understood that even in the case where the condition in which the function $D_\theta f(D_\varphi)$ of the latitude line spacing and the longitude line spacing on the spheroid EB and the function $\Delta_\theta f(\Delta_\varphi)$ of the latitude line spacing and the longitude line spacing on the true sphere are equal at the altitude h=0 and at a given latitude $\theta$ is set, the spheroid EB can be projected onto the true sphere CB with as small a distortion as possible.

Seventh Exemplary Embodiment

Next, a geographical information management device 700 according to a seventh exemplary embodiment of the present invention will be described. The geographical information management device 700 has the same configuration as that of the geographical information management device 100 according to the first exemplary embodiment. In this exemplary embodiment, an example of the operation method of the geographical information management device 700 on the true sphere CB will be described. The operation method described in this exemplary embodiment is carried out by the operation unit 3. In the case of setting an airspace for aircraft training or the like, an airway along which an aircraft is operated, and the like by using coordinates on the true sphere CB that are obtained by transforming coordinates on the spheroid EB, it is necessary to perform an appropriate operation on the true sphere CB. Examples of various operations on the true sphere CB will be described below.

Note that in formulas used in the following description, a vector quantity is represented by an arrow above a symbol. To simplify the explanation, all vector quantities are normalized. In the drawings described below, the true sphere CB indicates the earth and EQ represents the equator of the earth.

Calculation of a distance between two points

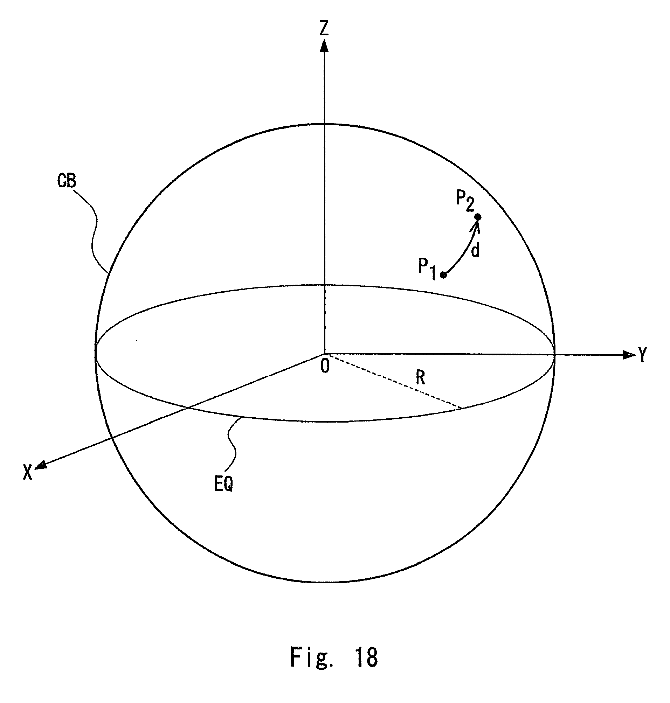

For example, in order to obtain a required flight time of an aircraft, it is essential to obtain a distance between two points. The calculation of the distance between the point $P_1$ and the point $P_2$ on the true sphere CB will now be described. An arc-like path with the distance d from the point $P_1$ as a start point to the point $P_2$ as an end point is set on the true sphere CB. Fig. 18 is a diagram showing a relationship between the point $P_1$ and the point $P_2$ on the true sphere CB. The position vector of the point $P_1$ can be defined by the above Formula (29).
The position vector of the point $P_2$ can be defined by the above Formula (30).
The distance d between the point $P_1$ and the point $P_2$ on the true sphere CB (on the ground surface) can be obtained by the above Formula (31) by using Formulas (29) and (30). The above Formula (32) can be obtained by expanding Formula (31). Formula (32) corresponds to the distance calculation formula in spherical trigonometry. This makes it possible to obtain the distance d between the point $P_1$ and the point $P_2$.

Calculation of an azimuth between two points on the true sphere

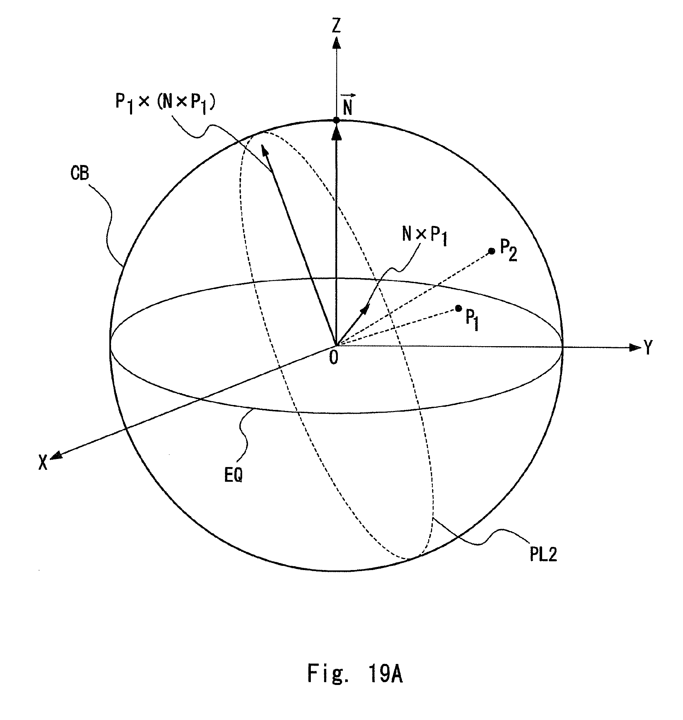

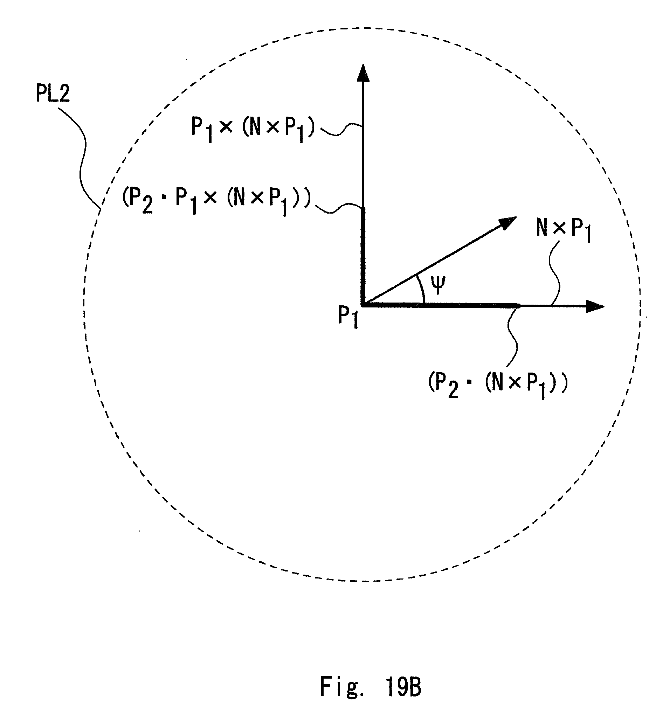

The calculation of an azimuth $\Psi$ between the point $P_1$ and the point $P_2$ on the true sphere CB (on the ground surface) will be described. Fig. 19A is a diagram showing the azimuth $\Psi$ between the point $P_1$ and the point $P_2$ on the true sphere CB. Fig. 19B is a diagram showing a case where a plane PL2 shown in Fig. 19A is viewed from above. A pole N of the true sphere CB (the north pole of the earth) will now be defined. A position vector indicating the pole N is represented by the following Formula (47). Note that the pole N is defined as the north pole of the true sphere CB, and is not a point obtained by projecting the north pole of the spheroid EB onto the true sphere EB.

$$\vec{N} = (0,0,1) \qquad \cdots \quad (47)$$

The plane PL2 is a plane that is perpendicular to the position vector of the point $P_1$ and includes the center of the earth. The plane PL2 is a plane that is parallel to the vector of the cross product between the position vector of the pole N and the position vector of the point $P_1$, and is also parallel to the vector of the cross product between this cross product and the position vector of the vector and point $P_1$.
By using the position vectors of the point $P_1$ and the point $P_2$, x is defined by the following Formula (48) and y is defined by the following Formula (49).

$$x = \left(\vec{P_2} \cdot \vec{N} - (\vec{N} \cdot \vec{P_1})\vec{P_1}\right) \qquad \cdots \quad (48)$$

$$y = \left(\vec{P_2} \cdot \vec{N} \times \vec{P_1}\right) \qquad \cdots \quad (49)$$

When y>0 holds, the azimuth $\Psi$ from the point $P_1$ to the point $P_2$ on the true sphere CB (on the ground surface) is represented by the following Formula (50).

$$\psi = \frac{\pi}{2} - \tan^{-1}\left(\frac{x}{y}\right) \qquad \cdots \quad (50)$$

When y<0 holds, the azimuth $\Psi$ from the point $P_1$ to the point $P_2$ on the true sphere CB (on the ground surface) is represented by the following Formula (51).

$$\psi = \frac{3\pi}{2} - \tan^{-1}\left(\frac{x}{y}\right) \qquad \cdots \quad (51)$$

When y=0 and x>0 hold, the azimuth Ψ from the point $P_1$ to the point $P_2$ on the true sphere CB (on the ground surface) is represented by the following Formula (52).

$$\psi = 0 \qquad \cdots \quad (52)$$

When y=0 and x<0 hold, the azimuth Ψ from the point $P_1$ to the point $P_2$ on the true sphere CB (on the ground surface) is represented by the following Formula (53).

$$\psi = \pi \qquad \cdots \quad (53)$$

A minimum path between two points on the true sphere and a method for interpolating the minimum path

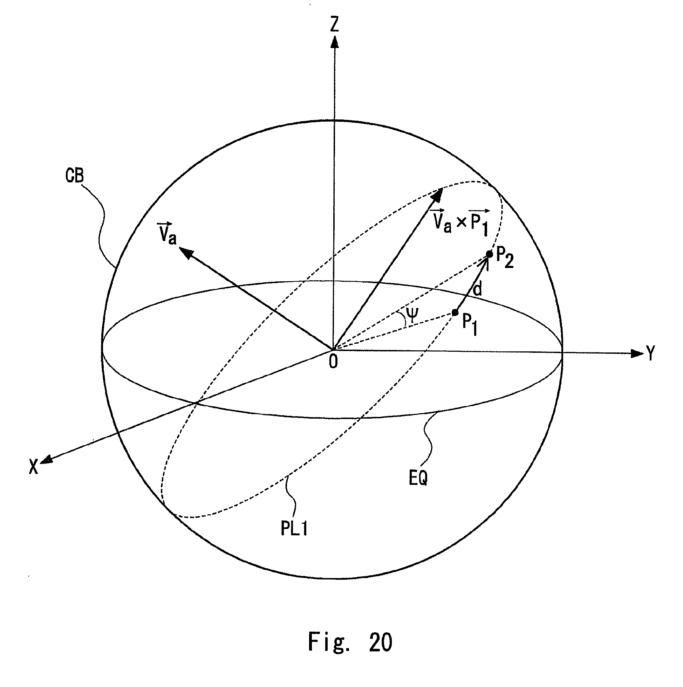

A minimum path between the point $P_1$ and the point $P_2$ on the true sphere CB (on the ground surface) and a method for interpolating the minimum path will be described. Fig. 20 is a diagram showing a relationship between the point $P_1$ and the point $P_2$ on the true sphere CB. Assuming that a point on the minimum path connecting the point $P_1$ and the point $P_2$ on the true sphere CB is represented by P, a position vector P representing the point P satisfies each vector equation in the following Formula (54). $V_a$ represents a unit normal vector with respect to the plane PL1 to which the line segment indicating the minimum path between the point $P_1$ and the point $P_2$ belongs. α represents an angle formed between the unit normal vector $V_a$ and the position vector of the point P. In this example, the angle α is π/2.

$$\vec{V_a} = \frac{\left(\vec{P_1} \times \vec{P_2}\right)}{\left|\vec{P_1} \times \vec{P_2}\right|}$$

$$\left(\vec{V_a} \cdot \vec{P}\right) = \cos\alpha$$

$$\left|\vec{V_a} \times \vec{P}\right| = \sin\alpha \qquad \cdots \quad (54)$$

The case of interpolating the minimum path between the point $P_1$ and the point $P_2$ will now be considered. x is defined by the following Formula (55) and y is defined by the following Formula (56). In this case, (x, y) represents a two-dimensional vector which is obtained by projecting the point $P_2$ onto a plane including the point $P_1$ and the point $P_2$, assuming that a component parallel to the point $P_1$ is plotted on an x-axis and a component perpendicular to the point $P_1$ is plotted on a y-axis.

$$x = \left(\vec{P_2} \cdot \vec{P_1}\right) \qquad \cdots \quad (55)$$

$$y = \left(\vec{P_2} \cdot \vec{V_a} \times \vec{P_1}\right) \qquad \cdots \quad (56)$$

By Formulas (55) and (56), a central angle Ψ of an arc that connects the point $P_1$ and the point $P_2$ on the plane including the point $P_1$ and the point $P_2$ is represented by the following Formula (57).

$$\psi = \frac{\pi}{2} - \tan^{-1}\left(\frac{x}{y}\right) \qquad \cdots \quad (57)$$

That is, the segment to be interpolated corresponds to the point P that satisfies each vector equation in Formula (54), and the segment is within the central angle $\Psi$ of the arc that connects the point $P_1$ and the point $P_2$. Accordingly, when a parameter t is used, the position vector of an interpolation point P(t) between the point $P_1$ and the point $P_2$ can be defined by the following formula (58).

$$\overrightarrow{P(t)} = \overrightarrow{P_1}\cos t + \left(\overrightarrow{V_a} \times \overrightarrow{P_1}\right)\sin t \qquad (0 \le t \le \psi) \qquad \cdots \quad (58)$$

In Formula (58), the minimum path between the point $P_1$ and the point $P_2$ can be interpolated by setting the parameter t as appropriate.

A latitude line that connects two points at the same latitude and interpolation the latitude line

A latitude line that connects the point $P_1$ and the point $P_2$ at the same latitude on the true sphere CB (on the ground surface) and interpolation of the latitude line will be described. A latitude line on the true sphere CB (on the ground surface) can be recognized as a rhumb line between two points at the same latitude on the true sphere CB.

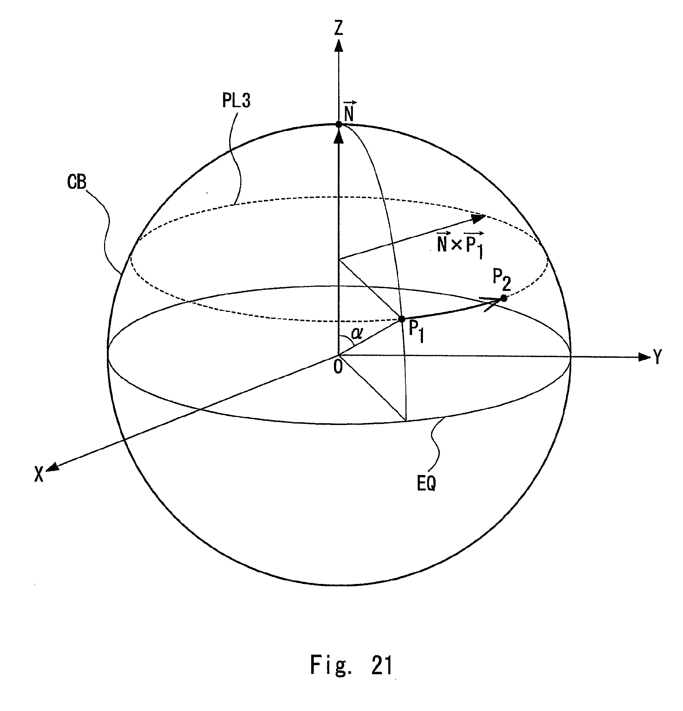

A case where the azimuth from the point $P_1$ (start point) to the point $P_2$ (end point) is east will be described. Fig. 21 is a diagram showing the case where the azimuth from the point $P_1$ to the point $P_2$ on the true sphere CB is east. Assuming that a point on the latitude line on which the point $P_1$ and the point $P_2$ are present on the true sphere CB is represented by P, the position vector of the point P satisfies each vector equation in Formula (59). Note that $V_b$ represents a unit normal vector with respect to a plane PL3 to which the latitude line on which the point $P_1$ and the point $P_2$ are present belongs. The pole N corresponds to the north pole of the true sphere CB, as with the above Formula (47). Since the plane PL3 is parallel to the latitude, the unit normal vector $V_b$ and the position vector of the pole N match each other.

$$\overrightarrow{V_b} = \overrightarrow{N} = (0,0,1)$$

$$\left(\overrightarrow{V_b} \cdot \overrightarrow{P}\right) = \cos\alpha$$

$$\left|\overrightarrow{V_b} \times \overrightarrow{P}\right| = \sin\alpha \qquad \cdots \quad (59)$$

$\alpha$ represents an angle formed between the pole N and the latitude $\Theta$ ($\theta$) of each of the point $P_1$ and the point $P_2$, and is represented by the following Formula (60).

$$\alpha = \frac{\pi}{2} - \Theta(\theta) \qquad \cdots \quad (60)$$

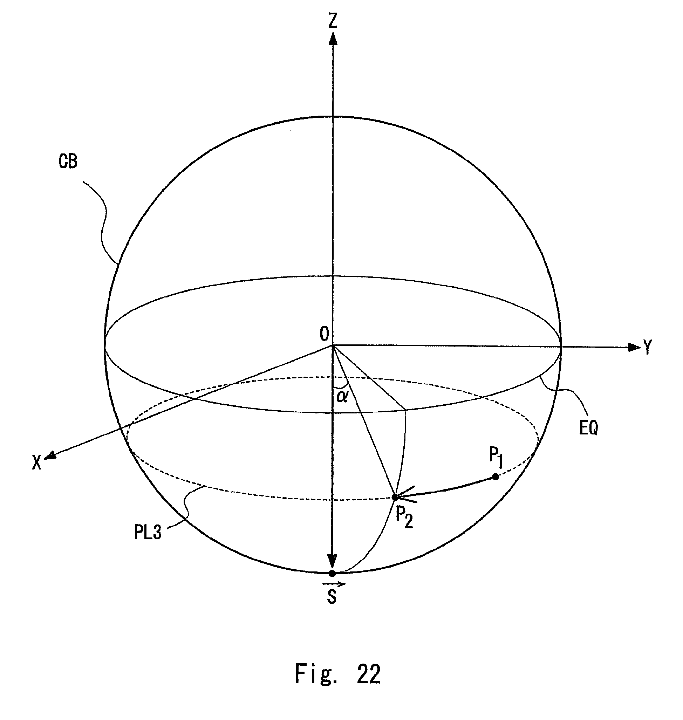

A case where the azimuth from the point $P_1$ (start point) to the point $P_2$ (end point) is west will be described. Fig. 22 is a diagram showing the case where the azimuth from the point $P_1$ to the point $P_2$ on the true sphere CB is west. Assuming that a point on the latitude line on which the point $P_1$ and the point $P_2$ are present on the true sphere CB is represented by P, the position vector of the point P satisfies each vector equation in Formula (61). Note that $V_c$ represents a unit normal vector with respect to the plane PL3 to which the latitude line on which the point $P_1$ and the point $P_2$ are present belongs. A pole S of the true sphere CB (the south pole of the earth) will now be defined. A position vector indicating the pole S is represented by the following Formula (61). Note that the pole S is defined as the south pole of the true sphere CB, and is not a point obtained by projecting the south pole of the spheroid EB onto the true sphere EB. Since the plane PL3 is parallel to the latitude line, the unit normal vector $V_c$ and the position vector representing the pole S match each other.

$$\vec{V_c} = \vec{S} = (0,0,-1)$$

$$\left(\vec{V_c} \cdot \vec{P}\right) = \cos\alpha$$

$$\left|\vec{V_c} \times \vec{P}\right| = \sin\alpha \qquad \cdots \quad (61)$$

$\alpha$ represents an angle formed between the pole S and the latitude $\Theta$ $(\theta)$ of each of the point $P_1$ and the point $P_2$, and is represented by the following Formula (62).

$$\alpha = \frac{\pi}{2} + \Theta(\theta) \qquad \cdots \quad (62)$$

By using the position vector of the point $P_1$ and the position vector of the point $P_2$, x is defined by the following Formula (63) and y is defined by the following Formula (64).

$$x = \left(\vec{P_2} \cdot \vec{P_1} - \left(\vec{V} \cdot \vec{P_1}\right)\vec{V}\right) \qquad \cdots \quad (63)$$

$$y = \left(\vec{P_2} \cdot \vec{V} \times \vec{P_1}\right) \qquad \cdots \quad (64)$$

The case of interpolating the latitude line between the point $P_1$ and the point $P_2$ will be considered. When the latitude line to be interpolated is a minor arc, the central angle $\Psi$ of the arc that connects the point $P_1$ and the point $P_2$ can be expressed by the following Formula (65).

$$\psi = \frac{\pi}{2} - \tan^{-1}\left(\frac{x}{y}\right) \qquad \cdots \quad (65)$$

When the latitude line to be interpolated is a major arc, the central angle $\Psi$ of the arc that connects the point $P_1$ and the point $P_2$ can be expressed by the following Formula (66).

$$\psi = \frac{3\pi}{2} - \tan^{-1}\left(\frac{x}{y}\right) \qquad \cdots \quad (66)$$

When the latitude line to be interpolated is a semi-circumference, the central angle $\Psi$ of the arc that connects the point $P_1$ and the point $P_2$ can be expressed by the following Formula (67).

$$\psi = \pi \qquad \cdots \quad (67)$$

Specifically, when the azimuth is east, the segment to be interpolated corresponds to the point P that satisfies each vector equation in Formulas (59) and (60), and also corresponds to the segment of the azimuth $\Psi$ between the point $P_1$ and the point $P_2$. When the azimuth $\Psi$ is west, the segment to be interpolated corresponds to the point P that satisfies each vector equation in Formulas (61) and (62), and also corresponds to the segment within the central angle

$\Psi$ of the arc that connects the point $P_1$ and the point $P_2$. Accordingly, when the parameter t is used, the position vector of the interpolation point P(t) between the point $P_1$ and the point $P_2$ can be defined by the following Formula (68). In Formula (68), the unit normal vector V is one of the unit normal vector $V_b$ and the unit normal vector $V_c$.

$$\overrightarrow{P(t)} = \overrightarrow{V}\cos\alpha + \left(\overrightarrow{P_1} - \left(\overrightarrow{V}\cdot\overrightarrow{P_1}\right)\overrightarrow{V}\right)\cos t + \left(\overrightarrow{V}\times\overrightarrow{P_1}\right)\sin t \qquad \left(0 \leq t \leq \psi\right) \quad \cdots \quad (68)$$

In Formula (68), the rhumb line between the point $P_1$ and the point $P_2$ at the same latitude line can be interpolated by setting the parameter t as appropriate.

A path obtained by projecting a circle on the spheroid onto the true sphere and a method for interpolating the path

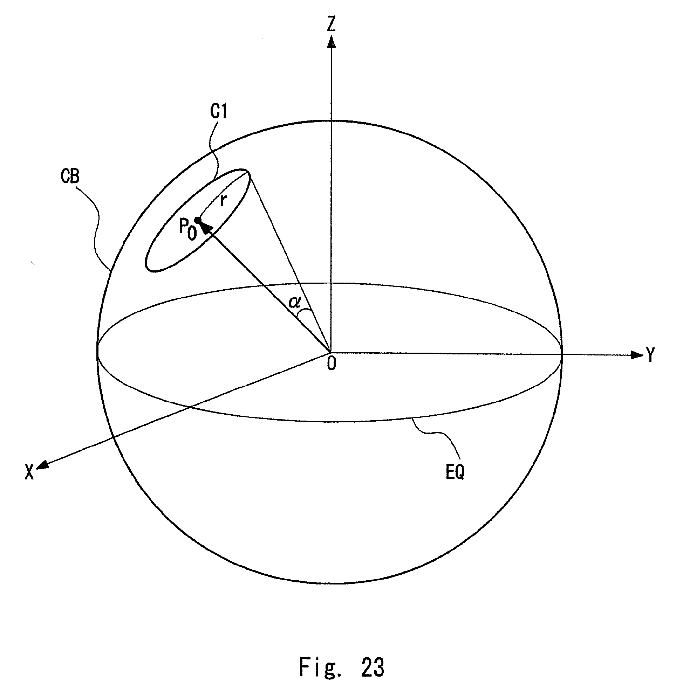

A path on the true sphere CB that is obtained when a circle on the spheroid EB is projected onto the true sphere CB, and a method for interpolating the path will be described. Fig. 23 is a diagram showing a path C1 on the true sphere CB that is obtained by projecting a circle on the spheroid EB onto the true sphere CB. A circle which has the radius r and is centered on a certain point $P_{0WGS}$ on the spheroid EB can be interpolated as a set of points with the distance r from a point $P_0$ which is a point obtained by projecting the point $P_{0WGS}$ onto the true sphere CB. This interpolation can be accurately performed even when the distance r is relatively large. Assuming that a point on the path C1 to be interpolated on the true sphere CB is represented by P, the position vector of the point P satisfies each vector equation in the following Formula (69) using the position vector of the point $P_0$. R represents the radius of the true sphere CB. $V_d$ represents a unit normal vector of a plane to which the path C1 belongs. The unit normal vector $V_d$ matches the position vector of the point $P_0$.

$$\overrightarrow{V_d} = \overrightarrow{P_0}$$

$$\left(\overrightarrow{V_d}\cdot\overrightarrow{P}\right) = \cos\alpha$$

$$\left|\overrightarrow{V_d}\times\overrightarrow{P}\right| = \sin\alpha \qquad \cdots \quad (69)$$

$\alpha$ represents an angle formed between the point $P_0$ and the point P on the true sphere, and the angle can be represented by the following Formula (70).

$$\alpha = \frac{r}{R} \qquad \cdots \quad (70)$$

In the case of interpolating a circle, a point on a uniform circumference is set as the point $P_1$ which serves as an interpolation start point and an interpolation end point. For example, the point $P_1$ is a point where the circumference intersects with the longitude line that connects the center of the circle and the pole. In this case, the point $P_1$ can be represented by the following Formula (71). Note that as described above, the pole N represents the pole (north pole) of the true sphere CB.

$$\overrightarrow{P_1} = \overrightarrow{P_0}\cos\alpha + \frac{\left(\overrightarrow{N} - \left(\overrightarrow{P_0}\cdot\overrightarrow{N}\right)\overrightarrow{P_0}\right)}{\sqrt{1 - \left(\overrightarrow{P_0}\cdot\overrightarrow{N}\right)^2}}\sin\alpha \qquad \cdots \quad (71)$$

The central angle $\Psi$ of the arc on the path C1 is $2\pi$ as represented by Formula (72).

$$\psi = 2\pi \qquad \cdots \qquad (72)$$

The case of interpolating the path C1 will now be considered. The segment to be interpolated corresponds to the point P that satisfies each vector equation in Formulas (69) and (70). Accordingly, when the parameter t is used, the position vector of the interpolation point P(t) on the path C1 can be defined by the following Formula (73).

$$\overrightarrow{P(t)} = \overrightarrow{P_0}\cos\alpha + \left(\overrightarrow{P_1} - \left(\overrightarrow{P_0}\cdot\overrightarrow{P_1}\right)\overrightarrow{P_0}\right)\cos t + \left(\overrightarrow{P_0}\times\overrightarrow{P_1}\right)\sin t \qquad \left(0 \le t \le \psi\right) \qquad \cdots \qquad (73)$$

In Formula (73), the path C1 that is obtained by projecting a circle on the spheroid EB onto the true sphere CB can be interpolated by setting the parameter t as appropriate.

A path obtained by projecting an arc connecting two points on the spheroid onto the true sphere and a method for interpolating the path

A path on the true sphere CB that is obtained when an arc on the spheroid EB is projected onto the true sphere CB, and a method for interpolating the path will be described. An arc which has the radius r, connects two points, and is centered on a certain point $P_{0WGS}$ on the spheroid EB can be interpolated as a set of points with the distance r from the point $P_0$ on the true sphere CB that is obtained by projecting the point $P_{0WGS}$.

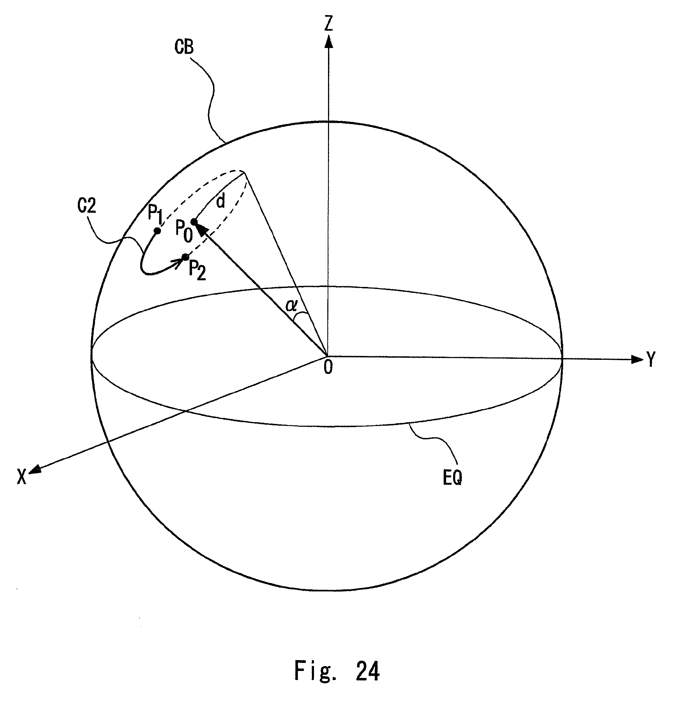

A case where the direction from the start point to the end point of the arc is counterclockwise will be described. Fig. 24 is a diagram showing a path C2 on the true sphere CB that is obtained by projecting an arc on the spheroid EB onto the true sphere CB when the direction from the start point to the end point of the arc is counterclockwise. Assuming that a point on the path C2 to be interpolated on the true sphere CB is represented by P, when the direction between the two points is counterclockwise, the position vector of the point P satisfies each vector equation of the following Formula (74). R represents the radius of the true sphere CB. $V_d$ represents a unit normal vector of a plane to which the path C2 belongs. The unit normal vector $V_d$ matches the position vector of the point $P_0$.

$$\overrightarrow{V_d} = \overrightarrow{P_0}$$

$$\left(\overrightarrow{V_d}\cdot\overrightarrow{P}\right) = \cos\alpha$$

$$\left|\overrightarrow{V_d}\times\overrightarrow{P}\right| = \sin\alpha \qquad \cdots \qquad (74)$$

$\alpha$ represents an angle formed between the point $P_0$ and the interpolation point P on the true sphere, and is represented by the following Formula (75).

$$\alpha = \frac{r}{R} \qquad \cdots \qquad (75)$$

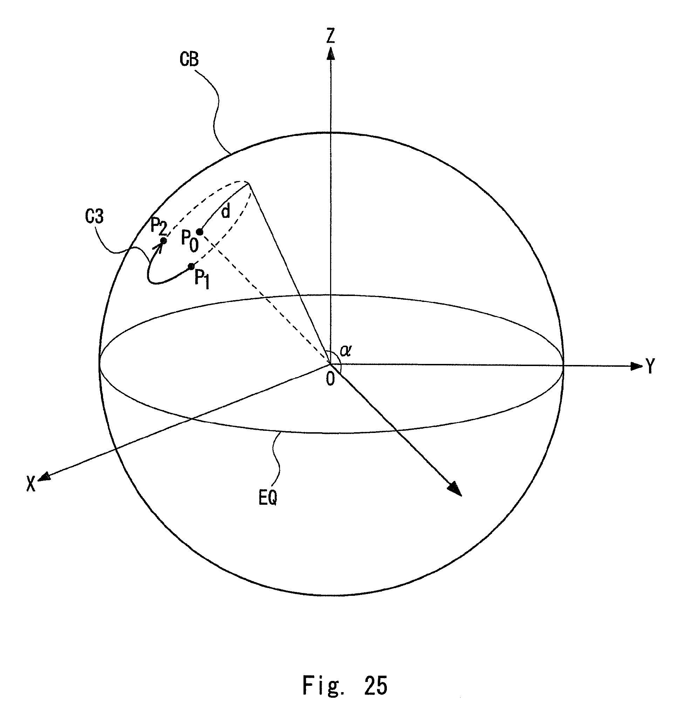

A case where the direction from the start point to the end point of the arc is clockwise will be described. Fig. 25 is a diagram showing a path on the true sphere CB that is obtained by projecting an arc on the spheroid EB onto the true sphere CB when the direction from the start point to the end point of the arc is clockwise. Assuming that a point on a path C3 to be interpolated on the true sphere CB is represented by P, when the direction between the two points is clockwise, the position vector of the point P satisfies each vector equation in the following Formula (76). R represents the radius of the true sphere CB. $V_e$ represents a unit normal vector of a plane to which the path C3 belongs. The unit formal vector $V_e$ has a direction opposite to that of the position vector of the point $P_0$.

$$\vec{V_e} = -\vec{P_0}$$

$$\left(\vec{V_e} \cdot \vec{P}\right) = \cos\alpha$$

$$\left|\vec{V_e} \times \vec{P}\right| = \sin\alpha \qquad \cdots \quad (76)$$

$\alpha$ represents an angle formed between the point $P_0$ and the interpolation P on the true sphere, and is represented by the following Formula (77).

$$\alpha = \pi - \frac{r}{R} \qquad \cdots \quad (77)$$

A case where the minimum path between the point $P_1$ (start point) and the point $P_2$ (end point) of each of the paths C2 and C3 will now be considered. The following description is common to both cases in which the direction of the path is counterclockwise and the direction of the path is clockwise. By using the position vector of the point $P_1$ and the position vector of the point $P_2$, x is defined by the following Formula (78) and y is defined by the following Formula (79). Note that the point $P_1$ is the start point of the path C2 or the path C3 and the point $P_2$ is the end point of the path C2 or the path C3. In Formulas (78) and (79), the unit normal vector V is one of the unit normal vector $V_d$ and the unit normal vector $V_e$.

$$x = \left(\vec{P_2} \cdot \vec{P_1} - \left(\vec{V} \cdot \vec{P_1}\right)\vec{V}\right) \qquad \cdots \quad (78)$$

$$y = \left(\vec{P_2} \cdot \vec{V} \times \vec{P_1}\right) \qquad \cdots \quad (79)$$

Based on Formulas (78) and (79), when the arc that connects the point $P_1$ and the point $P_2$ on the plane including the point $P_1$ and the point $P_2$ is a minor arc, the central angle $\Psi$ of the arc can be represented by the following Formula (80).

$$\psi = \frac{\pi}{2} - \tan^{-1}\left(\frac{x}{y}\right) \qquad \cdots \quad (80)$$

When the arc that connects the point $P_1$ and the point $P_2$ on the plane including the point $P_1$ and the point $P_2$ is a major arc, the central angle $\Psi$ of the arc can be represented by the following Formula (81).

$$\psi = \frac{3\pi}{2} - \tan^{-1}\left(\frac{x}{y}\right) \qquad \cdots \quad (81)$$

When the arc that connects the point $P_1$ and the point $P_2$ on the plane including the point $P_1$ and the point $P_2$ is a semi-circumference, the central angle $\Psi$ of the arc can be represented by the following Formula (82).

$$\psi = \pi \qquad \cdots \quad (82)$$

Specifically, when the path is counterclockwise (path C2), the segment to be interpolated corresponds to the point P that satisfies Formulas (74) and (75), and the segment is within the central angle $\Psi$ of the arc that connects the point $P_1$ and the point $P_2$. When the path is clockwise (path C3), the segment to be interpolated corresponds to the point P that satisfies Formulas (76) and (77), and the segment is within the central angle $\Psi$ of the arc that connects the point $P_1$ and the point $P_2$. Accordingly, when the parameter t is used, the position vector of the interpolation point P(t) between the point $P_1$ and the point $P_2$ can be defined by the following Formula (83).

$$\overrightarrow{P(t)} = \overrightarrow{P_0}\cos\alpha + \left(\overrightarrow{P_1} - \left(\overrightarrow{P_0}\cdot\overrightarrow{P_1}\right)\overrightarrow{P_0}\right)\cos t + \left(\overrightarrow{P_0}\times\overrightarrow{P_1}\right)\sin t \qquad \left(0 \leq t \leq \psi\right) \qquad \cdots \quad (83)$$

Generalization of the interpolation method

When paths which can be expressed as a great circle, a latitude line, a circle, and an arc on the spheroid EB are projected onto the true sphere CB with a small error, the paths can be described using similar vector equations with a minimum error in a wide range. Accordingly, the interpolation method on the true sphere EB can be generalized regardless of the type of paths. The generalized interpolation method can be expressed as the following Formula (84) using the parameter t. The point $P_1$ is the start point of the path to be interpolated, and is represented as a position vector in the formula. V represents a unit normal vector for a plane to which the path to be interpolated belongs.

$$\overrightarrow{P(t)} = \overrightarrow{V}\cos\alpha + \left(\overrightarrow{P_1} - \left(\overrightarrow{V}\cdot\overrightarrow{P_1}\right)\overrightarrow{V}\right)\cos t + \left(\overrightarrow{V}\times\overrightarrow{P_1}\right)\sin t \qquad \left(0 \leq t \leq \psi\right) \qquad \cdots \quad (84)$$

A block distance L of the path can be represented by the following Formula (85).

$$L = R\psi\sin\alpha \qquad \cdots \quad (85)$$

An offset line segment and a method for interpolating the offset line segment

On the basis of a minimum path, a latitude line, a circle, or an arc defined on the spheroid EB, a line segment having a constant distance d is defined on the side (one or both of the right side and the left side) of the minimum path, the latitude line, the circle, or the arc in some cases. This line segment is generally referred to as an offset line segment.

By defining the offset line segment on both sides of a certain path, for example, an area having a constant spacing d on both sides of the path can be held as a buffering area. The safety of aircraft, such as avoidance of a collision between aircraft, can be ensured by preventing this buffering area from overlapping other paths. The offset line segment may be set so as to hold a space with a constant width on the basis of a reference line.

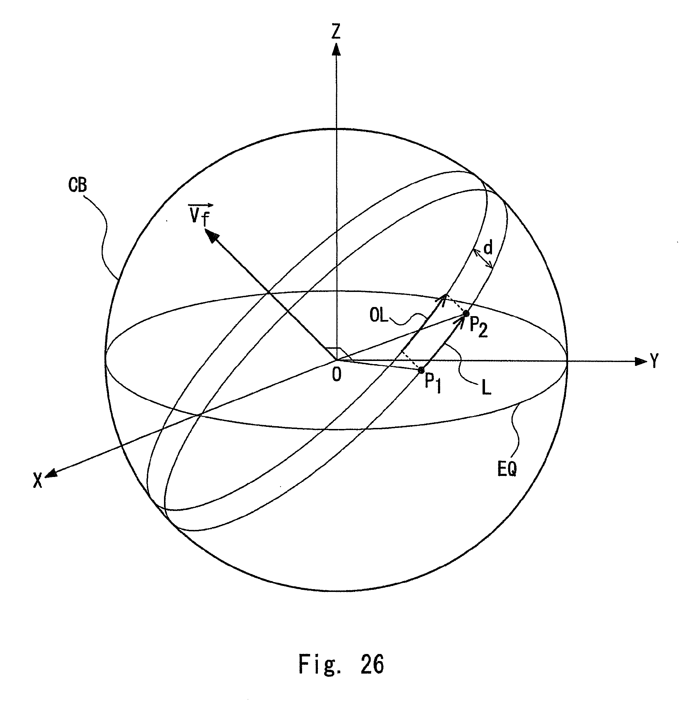

Fig. 26 is a diagram showing a relationship between a reference path L and an offset line segment OL on the true sphere CB. Assuming that a point on the offset line segment OL to be interpolated on the true sphere CB is represented by P, the point P satisfies each vector equation in the following Formula (86), where $V_f$ represents a unit normal vector for a plane to which a line segment L serving as a reference for the offset line segment OL belongs.

$$\overrightarrow{V} = \overrightarrow{V_f}$$

$$\left(\overrightarrow{V_f}\cdot\overrightarrow{P}\right) = \cos\alpha$$

$$\left|\overrightarrow{V_f}\times\overrightarrow{P}\right| = \sin\alpha \qquad \cdots \quad (86)$$

$\alpha_c$ represents an angle formed between $V_f$ and a given point on the reference path. The positive (negative) sign corresponds to the case where an offset is taken on the right (left) side with respect to the reference line. $\alpha$ in

Formula (86) is represented by the following Formula (87) using $\alpha_c$.

$$\alpha = \alpha_c \pm \frac{d}{R} \qquad \cdots \quad (87)$$

The point P is represented by the following Formula (88).

$$\vec{P} = \overrightarrow{V_f} \cos \alpha + \frac{\left( \overrightarrow{P_1} - \left( \overrightarrow{V_f} \cdot \overrightarrow{P_1} \right) \overrightarrow{V_f} \right)}{\sqrt{1 - \left( \overrightarrow{V_f} \cdot \overrightarrow{P_1} \right)^2}} \sin \alpha \qquad \cdots \quad (88)$$

That is, when the parameter t is used, the position vector of the interpolation point P(t) can be defined by the following Formula (89).

$$\overrightarrow{P(t)} = \vec{V} \cos \alpha + \left( \overrightarrow{P_1} - \left( \overrightarrow{V_f} \cdot \overrightarrow{P_1} \right) \overrightarrow{V_f} \right) \cos t + \left( \overrightarrow{V_f} \times \overrightarrow{P_1} \right) \sin t \qquad \left( 0 \leq t \leq \psi \right) \quad \cdots \quad (89)$$

In Formula (89), the offset line segment can be interpolated by setting the parameter t as appropriate.

Interpolation of inflection points of the offset line segment

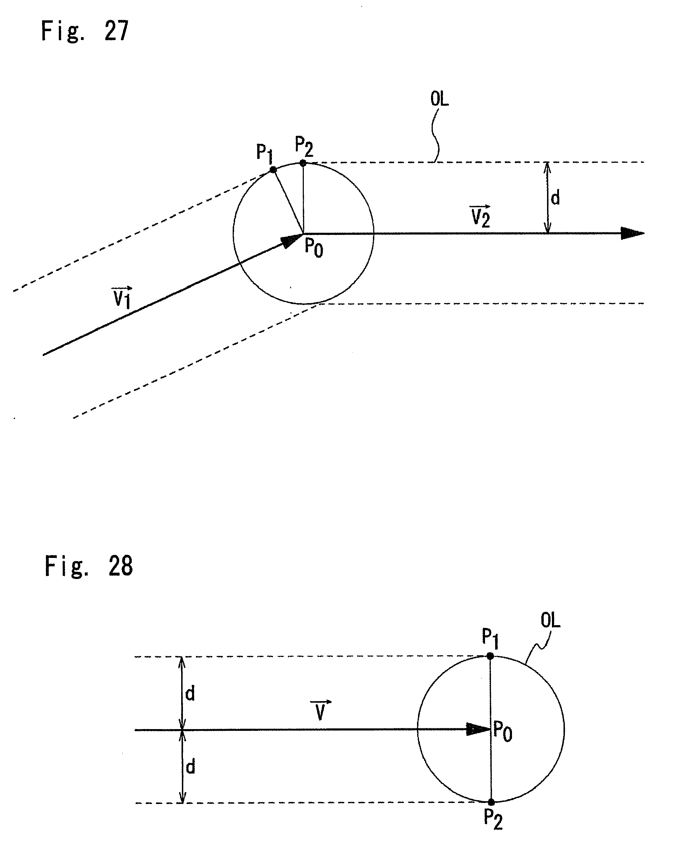

Basically, the interpolation of the offset line segment at inflection points of the continuous reference line segment can be performed in the same manner as in the interpolation of an arc. Fig. 27 is a diagram showing the vicinity of an inflection point of the offset line segment OL. Assuming that an inflection point between a line segment represented by a normal vector $V_1$ and a line segment represented by a normal vector $V_2$ is represented by $P_0$, when a point between the start point $P_1$ and the end point $P_2$ of the segment to be interpolated is represented by P, the position vector of the point P satisfies each vector equation in the following Formula (90), where V represents the position vector of the inflection point.

$$\vec{V} = \overrightarrow{P_0}$$

$$\left( \vec{V} \cdot \vec{P} \right) = \cos \alpha$$

$$\left| \vec{V} \times \vec{P} \right| = \sin \alpha \qquad \cdots \quad (90)$$

$\alpha$ represents a value obtained by dividing the offset distance d by the radius R of the true sphere, and is represented by the following Formula (91).

$$\alpha = \frac{d}{R} \qquad \cdots \quad (91)$$

The position vector of the point $P_1$ is represented by the following Formula (92).

$$\vec{P_1} = \vec{P_0}\cos\alpha \pm \frac{\sin\alpha\{\vec{V_1}-(\vec{V_1}\cdot\vec{P_0})\vec{P_0}\}}{\sqrt{1-(\vec{V_1}\cdot\vec{P_0})^2}} \qquad \cdots \quad (92)$$

The position vector of the point $P_2$ is defined as the following Formula (93).

$$\vec{P_2} = \vec{P_0}\cos\alpha \pm \frac{\sin\alpha\{\vec{V_2}-(\vec{V_2}\cdot\vec{P_0})\vec{P_0}\}}{\sqrt{1-(\vec{V_2}\cdot\vec{P_0})^2}} \qquad \cdots \quad (93)$$

When Formula (92) is substituted into Formula (90), the following Formula (94) is obtained.

$$(\vec{V}\cdot\vec{P_1}) = \left(\vec{P_0}\cdot\vec{P_0}\cos\alpha \pm \frac{\sin\alpha\{\vec{V_1}-(\vec{V_1}\cdot\vec{P_0})\vec{P_0}\}}{\sqrt{1-(\vec{V_1}\cdot\vec{P_0})^2}}\right)$$

$$= (\vec{P_0}\cdot\vec{P_0})\cos\alpha \pm \frac{\sin\alpha\{(\vec{P_0}\cdot\vec{V_1})-(\vec{V_1}\cdot\vec{P_0})(\vec{P_0}\cdot\vec{P_0})\}}{\sqrt{1-(\vec{V_1}\cdot\vec{P_0})^2}}$$

$$= \cos\alpha \pm \frac{\sin\alpha\{(\vec{P_0}\cdot\vec{V_1})-(\vec{V_1}\cdot\vec{P_0})\}}{\sqrt{1-(\vec{V_1}\cdot\vec{P_0})^2}}$$

$$= \cos\alpha \qquad \cdots \quad (94)$$

When Formula (93) is substituted into Formula (90), the following Formula (95) is obtained.

$$\begin{aligned}
\left(\vec{V}\cdot\vec{P_1}\right) &= \left(\vec{V_1}\cdot\vec{P_0}\cos\alpha \pm \frac{\sin\alpha\{\vec{V_1}-(\vec{V_1}\cdot\vec{P_0})\vec{P_0}\}}{\sqrt{1-(\vec{V_1}\cdot\vec{P_0})^2}}\right) \\[2mm]
&= \left(\vec{V_1}\cdot\vec{P_0}\right)\cos\alpha \pm \frac{\sin\alpha\{(\vec{V_1}\cdot\vec{V_1})-(\vec{V_1}\cdot\vec{P_0})(\vec{V_1}\cdot\vec{P_0})\}}{\sqrt{1-(\vec{V_1}\cdot\vec{P_0})^2}} \\[2mm]
&= \left(\vec{V_1}\cdot\vec{P_0}\right)\cos\alpha \pm \frac{\sin\alpha\{1-(\vec{V_1}\cdot\vec{P_0})^2\}}{\sqrt{1-(\vec{V_1}\cdot\vec{P_0})^2}} \\[2mm]
&= \cos\alpha\left(\vec{V_1}\cdot\vec{P_0}\right) \pm \sin\alpha\sqrt{1-(\vec{V_1}\cdot\vec{P_0})^2} \\[2mm]
&= \cos\alpha\cos\alpha_b \pm \sin\alpha\sqrt{1-\cos^2\alpha_b} \\[2mm]
&= \cos\alpha\cos\alpha_b \pm \sin\alpha\sin\alpha_b \\[2mm]
&= \cos\left(\alpha_b \pm \frac{d}{R}\right) \qquad\qquad \cdots \quad (95)
\end{aligned}$$

In Formulas (94) and (95), the double sign in parentheses indicates inflection to the right (+) and inflection to the left (-).

By using the above Formulas (94) and (95), the interpolation between the endpoints (the point $P_1$ and the point $P_2$) of the arc portion of the offset line segment in the vicinity of the inflection point can be performed by performing the line segment interpolation described above. Specifically, the offset line segment in the vicinity of the inflection point of the continuous line segment can be interpolated by using the above Formula (83).

Interpolation of endpoinds of the offset line segment

Basically, the interpolation of endpoints of the offset line segment with respect to the starting and terminating ends of the reference line segment can be performed in the same manner as in the interpolation of an arc. Fig. 28 is a diagram showing the vicinity of an end of the reference line segment. Assuming that an endpoint of the line segment represented by the normal vector $V_1$ is represented by $P_0$, when a point on the line segment that connects endpoints is represented by P, the point P satisfies each vector equation in Formula (96), where V represents the position vector of the endpoint $P_0$ of the reference line segment.

$$\vec{V} = \vec{P_0}$$

$$\left(\vec{V}\cdot\vec{P}\right) = \cos\alpha$$

$$\left|\vec{V}\times\vec{P}\right| = \sin\alpha \qquad\qquad \cdots \quad (96)$$

$\alpha$ represents a value obtained by dividing the offset distance d by the radius R of the true sphere, and is represented by the following Formula (97).

$$\alpha = \frac{d}{R} \qquad \cdots \qquad (97)$$

In this case, the position vector of the endpoint $P_1$ is represented by the following Formula (98).

$$\vec{P_1} = \vec{P_0}\cos\alpha - \frac{\sin\alpha\left\{\vec{V_1} - \left(\vec{V_1}\cdot\vec{P_0}\right)\vec{P_0}\right\}}{\sqrt{1 - \left(\vec{V_1}\cdot\vec{P_0}\right)^2}} \qquad \cdots \qquad (98)$$

In this case, the position vector of the endpoint $P_2$ is represented by Formula (99).

$$\vec{P_2} = \vec{P_0}\cos\alpha + \frac{\sin\alpha\left\{\vec{V_1} - \left(\vec{V_1}\cdot\vec{P_0}\right)\vec{P_0}\right\}}{\sqrt{1 - \left(\vec{V_1}\cdot\vec{P_0}\right)^2}} \qquad \cdots \qquad (99)$$

The interpolation between the endpoints (between the point $P_1$ and the point $P_2$) at the ends of the offset line segment can be performed by interpolating the above-mentioned line segment by using the above Formulas (98) and (99). Specifically, the offset line segment at the endpoints of the reference line segment can be interpolated using the above Formula (83).

Eighth Exemplary Embodiment

Next, a geographical information management device 800 according to an eighth exemplary embodiment of the present invention will be described. The geographical information management device 800 has the same configuration as that of the geographical information management device 100 according to the first exemplary embodiment. This exemplary embodiment illustrates an example in which an airspace is set on the true sphere by using the operation method described in the seventh exemplary embodiment.

Airspaces have various shapes. For example, in the case of a square airspace, the airspace can be defined by four line segments on the true sphere CB. In the case of a circular airspace, the airspace can be defined by a path obtained by projecting a circle on the spheroid EB onto the true sphere CB. In the case of a fan-shaped airspace, the airspace can be defined by a path obtained by projecting an arc on the spheroid EB onto the true sphere CB and two line segments on the true sphere CB. In the case of an airspace having a predetermined width with respect to a certain line segment, the airspace can be defined by two offset line segments with respect to a predetermined line segment on the true sphere CB and two line segments on the true sphere CB that connect the endpoints of the two offset line segments.

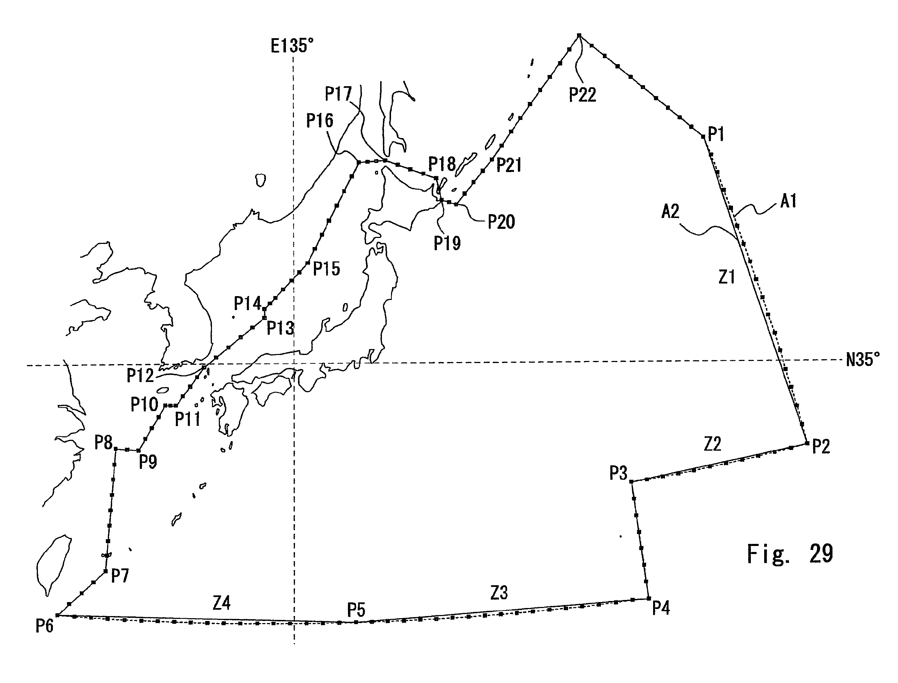

Specific examples of airspaces will be described below. Fig. 29 is a map showing an example of airspaces defined on the true sphere CB. To simplify the explanation, Fig. 29 shows an airspace on the true sphere on a plane. Fig. 29 shows an airspace A1 obtained by projecting the airspace on the spheroid EB onto the true sphere EB as described in the above exemplary embodiments, and also shows, as a comparative example, an airspace A2 which is obtained by linearly interpolating the airspace on the spheroid EB. Note that each of the airspaces A1 and A2 indicates the flight information region (FIR) in which Japan is responsible for the air traffic control.

The airspace A1 is formed of 22 inflection points PP1 to PP22 and 21 line segments that connect the inflection points to each other. The line segments are each interpolated by the method described in the sixth exemplary embodiment.

The airspace A2 which is obtained by linear interpolation as a comparative example is formed by linear interpolation between the adjacent inflection points of the 22 inflection points PP1 to PP22 by using the Universal Transverse Mercator (UTM) projection. Note that since the transformation error is large in the UTM projection, the UTM projection can be applied only to a latitude range of about $\pm 3°$. Accordingly, the UTM projection is not suitable for a wide airspace such as the flight information region in which Japan is responsible for the air traffic control. Therefore, in this exemplary embodiment, the UTM projection, which is generally used, is employed as a comparative example so as to understand the superiority of the projection onto the true sphere EB according to the above exemplary embodiments.

As shown in Fig. 29, the gap between the airspace A1 and the airspace A2 is large between the inflection point P1 and the inflection point P2 in the Pacific Ocean to the east of the Japanese archipelago (segment Z1); between the inflection point P2 and the inflection point P3 in the Pacific Ocean to the southeast of the Japanese archipelago (segment Z2); between the inflection point P4 and the inflection point P5 in the Pacific Ocean to the south of the Japanese archipelago (segment Z3); and between the inflection point P5 and the inflection point P6 in the Pacific Ocean to the south of the Japanese archipelago (segment Z4). This gap has a large value of about several tens of km.

If such a gap is generated, various problems occur in the management of the airspace. First, for example, in the case of using the UTM projection, a difference in normal coordinates for transformation may result in a variation in error. For example, in the case of setting the flight information region under the control of each country, if each country employs different normal coordinates using coordinate systems that are convenient for their own purposes, a malfunction, such as overlapping of the airspaces that are not supposed to overlap each other, occurs. As a result, the airspace information varies from country to country, which makes it difficult to share the airspace information between different air traffic control authorities. As a result, the airspaces and routes cannot be optimized in a wide area.

Second, there can be a case where it comes to a conclusion, due to an error, that routes that originally overlap each other are not overlapping. In this case, there is a possibility that a plurality of aircraft enter the same airspace at the same time, which poses a problem in terms of ensuring the safety of aircraft.

Third, even in the case of setting a route that has a minimum path, a route deviating from the minimum path may be set due to an error. In this case, the aircraft is caused to fly an extra distance, which results in an increase in fuel consumption. This is disadvantageous from the viewpoint of economic operation of aircraft.

These problems can be solved by geodesic interpolation using coordinates on the spheroid that is approximate to the actual shape of the earth. However, as described above, the geodesic interpolation using coordinates on the spheroid requires complicated calculations such as elliptic integral. Therefore, it is necessary to use techniques such as sectional measurement and repeated calculation. This results in the necessity of a large number of calculation resources.

Accordingly, in this exemplary embodiment, the design of an airspace and setting of a route can be easily performed by only projecting coordinates on the spheroid onto the true sphere by calculations of, for example, the interpolation on the true sphere as described in the sixth exemplary embodiment, to be specific, elementary functions and arithmetic operations. Further, as described in the above exemplary embodiments, the error in the interpolation on the true sphere is smaller than that in a general method, such as the UTM projection, and thus is suitable for an application to a wide area. Furthermore, unlike in the UTM projection, a variation in error due to a difference in normal coordinates is small. This facilitates sharing of information among, for example, flight information regions.

Other Exemplary Embodiments

Note that the present invention is not limited to the above exemplary embodiments and can be modified as appropriate without departing from the scope of the invention. For example, the above exemplary embodiments have illustrated the case where the geographical information management device, which is an example of the coordinate transformation device, is mounted on a vehicle such as an aircraft that travels above the earth. However, this is merely an example. The coordinate transformation device (geographical information management device) according to exemplary embodiments described above can be mounted on other vehicles that travel on the earth, such as vehicles that fly through the air, other than aircraft, vehicles that travel on the land, ships that travel on the sea, and submersible vehicles that travel in the sea. The coordinate transformation device (geographical information management device) according to exemplary embodiments described above can be incorporated not only in vehicles, but also in an operation management system and the like of vehicles, such as a control system for controlling aircraft.

In the above exemplary embodiments, the present invention is described as a hardware configuration, but the present invention is not limited to this. According to the present invention, any processing can be implemented by causing a CPU (Central Processing Unit) to execute a computer program. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magnetooptical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

While the present invention has been described above with reference to exemplary embodiments, the present invention is not limited to the above exemplary embodiments. The configuration and details of the present invention can be modified in various ways which can be understood by those skilled in the art within the scope of the invention.

This application is based upon and claims the benefit of priority from Japanese patent application No. 2013-001110, filed on January 8, 2013, and Japanese patent application No. 2013-178833, filed on August 30, 2013, the disclosure of which is incorporated herein in its entirety by reference.

Reference Signs List

| | |
|---|---|
| 1 | INPUT DEVICE |
| 2, 6 | STORAGE DEVICE |
| 3 | OPERATION UNIT |
| 4 | DISPLAY DEVICE |
| 5 | BUS |
| 100, 200, 300, 400, 500, 600, 700, 800 | GEOGRAPHICAL INFORMATION MANAGEMENT DEVICE |
| CB | TRUE SPHERE |
| D1 | BASIC SHAPE DATABASE |
| D2 | AIRSPACE INFORMATION DATABASE |
| D3 | PARAMETER INFORMATION DATABASE |
| D4 | PROJECTION INFORMATION DATABASE |
| D5 | PARAMETER INFORMATION DATABASE |
| DL | LATITUDE LINE SPACING RATIO |
| DM | LONGITUDE LINE SPACING RATIO |
| EB | SPHEROID |
| EQ | EQUATOR |
| OBJ | OBJECT TO BE OBSERVED |
| PRG1 | COORDINATE TRANSFORMATION PROGRAM |
| PRG2 | COORDINATE INVERSE TRANSFORMATION PROGRAM |

**Claims**

1. A coordinate transformation device comprising:

   storage means for storing information specifying a shape of a spheroid; information indicating coordinates on the spheroid described using the information specifying the shape of the spheroid; and information indicating a transformation parameter for transforming the information indicating coordinates on the spheroid into information indicating coordinates on a true sphere; and
   operation means for generating a formula for performing coordinate transformation processing by substituting the transformation parameter into a predetermined formula, transforming the information indicating coordinates on the spheroid into coordinates on the true sphere by substituting, into the generated formula, the information specifying the shape of the spheroid and the information indicating coordinates on the spheroid, and outputting the transformed information indicating coordinates on the true sphere.

2. The coordinate transformation device according to Claim 1, wherein
   coordinates on the spheroid are described as three-dimensional polar coordinates by using a first radius vector, a first declination, and a second declination, and
   coordinates on the true sphere are described as three-dimensional polar coordinates by using a second radius vector, a third declination, and a fourth declination.

3. The coordinate transformation device according to Claim 2, wherein
   the spheroid represents the shape of the earth,
   the first declination represents a latitude of the spheroid,
   the second declination represents a longitude of the spheroid,
   the third declination represents a latitude of the true sphere, and
   the fourth declination represents a longitude of the true sphere.

4. The coordinate transformation device according to Claim 3, wherein assuming that $\theta$ represents a latitude of the spheroid; $\varphi$ represents a longitude of the spheroid; $\Theta$ represents a latitude of the true sphere; $\Phi$ represents a longitude of the true sphere; a represents an equatorial radius of the spheroid; h represents an altitude of coordinates to be transformed with respect to the spheroid and the true sphere; N represents a radius of the spheroid at a point corresponding to a position represented by the coordinates to be transformed; f represents flattening of the spheroid; e represents an eccentricity of the spheroid; and R represents a radius of the true sphere, coordinates (x, y, z) on the spheroid and coordinates (X, Y, Z) on the true sphere are defined by the following formula.

$$x = (N + h)\cos\theta\cos\phi$$

$$y = (N + h)\cos\theta\sin\phi$$

$$z = \left(N(1 - e^2) + h\right)\sin\theta$$

$$e^2 = 2f - f^2$$

$$N = \frac{a}{\sqrt{\left(1 - e^2\sin^2\theta\right)}}$$

$$X = (R + h)\cos\Theta\cos\Phi$$

$$Y = (R + h)\cos\Theta\sin\Phi$$

$$Z = (R + h)\sin\Theta$$

5. The coordinate transformation device according to Claim 4, wherein
a latitude spacing at an equator of the spheroid is equal to a latitude spacing of the true sphere at an equator of the true sphere,
a longitude spacing at the equator of the spheroid is equal to a longitude spacing of the true sphere at the equator of the true sphere,
at a predetermined reference latitude of the spheroid, a primary change rate of the latitude spacing at the equator of the spheroid is equal to a primary change rate of the latitude spacing at the equator of the true sphere,
at the reference latitude, a primary change rate of the longitude spacing at the equator of the spheroid is equal to a primary change rate of the longitude spacing at the equator of the true sphere, and
at the reference latitude, the transformation parameter is determined under a condition in which a secondary change rate of the longitude spacing at the equator of the spheroid is equal to a secondary change rate of the longitude spacing at the equator of the true sphere.

6. The coordinate transformation device according to Claim 5, wherein
assuming that Pr represents a transformation parameter for transforming the equatorial radius a of the spheroid into the radius R of the true sphere; $\theta_0$ represents the reference latitude; and $\phi_0$ represents a reference longitude, the equatorial radius a of the spheroid is transformed into the radius R of the true sphere by the following formula, and

$$R = \mathrm{Pr}\cdot a$$

$$\mathrm{Pr} = \frac{\sqrt{\left(1 - e^2\right)}}{\left(1 - e^2 \sin^2 \theta_0\right)}$$

assuming that $\lambda_\varphi$ represents a transformation parameter for transforming the longitude $\varphi$ of the spheroid into the longitude $\Phi$ of the true sphere, the longitude $\varphi$ of the spheroid is transformed into the longitude $\Phi$ of the true sphere by the following formula, and

$$\Phi = \lambda_\phi \left(\phi - \phi_0\right)$$

$$\lambda_\phi = \sqrt{\frac{1 - e^2 \sin^2 \theta_0 (1 + \cos^2 \theta_0)}{1 - e^2}}$$

assuming that $\Pi$ represents an elliptic integral of the third kind, the latitude $\theta$ of the spheroid is transformed into the latitude $\Theta$ of the true sphere by the following formula:

$$\Theta = \frac{a\left(1 - e^2\right)}{R} \Pi(e^2; \theta, e) + C$$

7. The coordinate transformation device according to Claim 6, wherein the formula for transforming the latitude $\theta$ of the spheroid into the latitude $\Theta$ of the true sphere is approximated using Helmert's expansion and is represented by the following formula assuming that $\lambda_0$, $\lambda_2$, $\lambda_4$, $\lambda_6$, $\lambda_8$, and $\lambda_\theta$ respectively represent transformation parameters for transforming the latitude $\theta$ of the spheroid into the latitude $\Theta$ of the true sphere and n represents a third flattening.

$$\Theta = \lambda_\theta \theta + \lambda_2 \sin 2\theta + \lambda_4 \sin 4\theta + \lambda_6 \sin 6\theta + \lambda_8 \sin 8\theta + \lambda_0$$

$$n = \frac{f}{2 - f}$$

$$\lambda_\theta = \frac{a}{(1 + n)R}\left(1 + \frac{n^2}{4} + \frac{n^4}{64}\right)$$

$$\lambda_2 = \frac{-3a}{2(1 + n)R}\left(n - \frac{n^3}{8}\right)$$

$$\lambda_4 = \frac{15a}{16(1+n)\mathrm{R}}\left(n^2 - \frac{n^4}{4}\right)$$

$$\lambda_6 = \frac{-35an^3}{48(1+n)\mathrm{R}}$$

$$\lambda_8 = \frac{315an^4}{512(1+n)\mathrm{R}}$$

$$\lambda_0 = \Theta_0 - \left(\lambda_\theta \theta_0 + \lambda_2 \sin 2\theta_0 + \lambda_4 \sin 4\theta_0 + \lambda_6 \sin 6\theta_0 + \lambda_8 \sin 8\theta_0\right)$$

8.  The coordinate transformation device according to Claim 7, wherein
    the storage means stores an inverse transformation parameter for inversely transforming information indicating coordinates on the true sphere into information indicating coordinates on the spheroid,
    the operation means generates a formula for performing coordinate inverse transformation processing by substituting the inverse transformation parameter into a predetermined formula, transforms the information indicating coordinates on the true sphere into the information indicating coordinates on the spheroid by substituting, into the generated formula, the information indicating coordinates on the true sphere, and outputs the transformed information indicating coordinates on the spheroid.

9.  The coordinate transformation device according to Claim 8, wherein
    the radius R of the true sphere is inversely transformed into the equatorial radius a of the spheroid by the following formula,

$$a = \frac{R}{\mathrm{Pr}}$$

the longitude $\Phi$ of the true sphere is transformed into the longitude $\varphi$ of the spheroid by the following formula, and

$$\phi = \frac{\Phi}{\lambda_\phi} + \phi_0$$

the latitude $\Theta$ of the true sphere is transformed into the latitude $\theta$ of the spheroid by Newton-Raphson method.

10. The coordinate transformation device according to any one of Claims 1 to 9, wherein the operation means performs an interpolation operation on each line segment of an open area or a closed area represented by a plurality of pieces of coordinate information on the true sphere.

11. A non-transitory computer readable medium storing a coordinate transformation program for causing a computer to execute processing comprising:

    reading information specifying a shape of a spheroid, information indicating coordinates on the spheroid described using the information specifying the shape of the spheroid, and information indicating a transformation parameter used for coordinate transformation processing;
    generating a formula for performing the coordinate transformation processing by substituting the transformation parameter into a predetermined formula;
transforming the information indicating coordinates on the spheroid into information indicating coordinates on a true sphere by substituting, into the generated formula, the information specifying the shape of the spheroid and the information indicating coordinates on the spheroid; and
outputting the transformed information indicating coordinates on the true sphere.

12. A coordinate transformation method comprising:

generating a formula for performing coordinate transformation processing by substituting a transformation parameter into a predetermined formula, the transformation parameter being used for the coordinate transformation processing;
substituting, into the generated formula, information specifying a shape of a spheroid and information indicating coordinates on the spheroid described using the information specifying the shape of the spheroid, and transforming the information indicating coordinates on the spheroid into information indicating coordinates on a true sphere; and
outputting the transformed information indicating coordinates on the true sphere.

<u>100</u>

Fig. 1A

<u>100</u>

OPERATION
UNIT

3

D1
D2
D3

D4

STORAGE DEVICE

D1    D2    D3

2

Fig. 1B

START

READ PRG1 — S11

READ D1-D3 — S12

GENERATE FORMULA — S13

COORDINATE
TRANSFORMATION
(WGS84→TRUE SPHERE) — S14

OUTPUT
TRANSFORMED COORDINATES — S15

END

Fig. 2

Fig. 3

D1

EQUATORIAL RADIUS a

FLATTENING f

Fig. 4

D2

p (x, y, z)

AIRSPACE NAME

AIRSPACE SHAPE

LINE SEGMENT
(GREAT CIRCLE, LATITUDE LINE, LONGITUDE LINE)
REPRESENTING AIRSPACE RANGE

CIRCLE/ARC REPRESENTING AIRSPACE RANGE

LATITUDE/LONGITUDE OF START POINT OF LINE SEGMENT

LATITUDE/LONGITUDE OF END POINT OF LINE SEGMENT

CENTER LATITUDE/LONGITUDE OF CIRCLE

RADIUS OF CIRCLE

Fig. 5

D4

P (X, Y, Z)

AIRSPACE NAME

AIRSPACE SHAPE

LINE SEGMENT
(GREAT CIRCLE, LATITUDE LINE, LONGITUDE LINE)
REPRESENTING AIRSPACE RANGE

CIRCLE/ARC REPRESENTING AIRSPACE RANGE

LATITUDE/LONGITUDE OF START POINT OF LINE SEGMENT

LATITUDE/LONGITUDE OF END POINT OF LINE SEGMENT

CENTER LATITUDE/LONGITUDE OF CIRCLE

RADIUS OF CIRCLE

Fig. 6

Fig. 7

Fig. 8

D3

$$\begin{array}{cc} Pr & \lambda_\theta \\ e & \lambda_0 \\ \theta_0 & \lambda_2 \\ \phi_0 & \lambda_4 \\ \lambda_\phi & \lambda_6 \\ & \lambda_8 \end{array}$$

Fig. 9

Fig. 10A

Fig. 10B

EP 2 945 145 A1

Fig. 11A

Fig. 11B

EP 2 945 145 A1

Fig. 11C

Fig. 11D

RANGE OF ERROR RATE
WITHIN ±0.04%

RANGE OF ERROR RATE
WITHIN ±0.01%

$\phi_0$

SPACING RATIO

Fig. 11E

| REFERENCE LATITUDE | RANGE OF ERROR RATE LESS THAN 0.01% | | RANGE OF ERROR RATE LESS THAN 0.04% | |
|---|---|---|---|---|
| NORTH POLE | DEGREES 54 NORTH LATITUDE | NORTH POLE | DEGREES 39 NORTH LATITUDE | NORTH POLE |
| DEGREES 54 NORTH LATITUDE | DEGREES 33 NORTH LATITUDE | DEGREES 72 NORTH LATITUDE | DEGREES 20 NORTH LATITUDE | DEGREES 80 NORTH LATITUDE |
| DEGREES 36 NORTH LATITUDE | DEGREES 14 NORTH LATITUDE | DEGREES 55 NORTH LATITUDE | EQUATOR | DEGREES 64 NORTH LATITUDE |
| DEGREES 18 NORTH LATITUDE | DEGREES 11 SOUTH LATITUDE | DEGREES 40 NORTH LATITUDE | DEGREES 63 SOUTH LATITUDE | DEGREES 50 NORTH LATITUDE |
| EQUATOR | DEGREES 31 SOUTH LATITUDE | DEGREES 31 NORTH LATITUDE | DEGREES 43 SOUTH LATITUDE | DEGREES 43 NORTH LATITUDE |
| DEGREES 18 SOUTH LATITUDE | DEGREES 40 SOUTH LATITUDE | DEGREES 11 NORTH LATITUDE | DEGREES 50 SOUTH LATITUDE | DEGREES 63 NORTH LATITUDE |
| DEGREES 36 SOUTH LATITUDE | DEGREES 55 SOUTH LATITUDE | DEGREES 14 SOUTH LATITUDE | DEGREES 64 SOUTH LATITUDE | EQUATOR |
| DEGREES 54 SOUTH LATITUDE | DEGREES 72 SOUTH LATITUDE | DEGREES 33 SOUTH LATITUDE | DEGREES 80 SOUTH LATITUDE | DEGREES 20 SOUTH LATITUDE |
| SOUTH POLE | SOUTH POLE | DEGREES 54 SOUTH LATITUDE | SOUTH POLE | DEGREES 39 SOUTH LATITUDE |

Fig. 12

Fig. 13

EP 2 945 145 A1

Fig. 14

Fig. 15

200

START

READ PRG2 —— S21

READ D1, D4, AND D5 —— S22

GENERATE FORMULA —— S23

COORDINATE
INVERSE TRANSFORMATION
(TRUE SPHERE→WGS84) —— S24

OUTPUT
INVERSELY-TRANSFORMED
COORDINATES —— S25

END

Fig. 16

D5

$$Pr \qquad \lambda_\theta \qquad \delta_0$$

$$e \qquad \lambda_0 \qquad \delta_2$$

$$\theta_0 \qquad \lambda_2 \qquad \delta_4$$

$$\phi_0 \qquad \lambda_4 \qquad \delta_6$$

$$\lambda_\phi \qquad \lambda_6 \qquad \delta_8$$

$$\lambda_8$$

Fig. 17

Fig. 18

Fig. 19A

PL2

$P_1 \times (N \times P_1)$

$(P_2 \cdot P_1 \times (N \times P_1))$

$N \times P_1$

$\psi$

$P_1$

$(P_2 \cdot (N \times P_1))$

Fig. 19B

Fig. 20

Fig. 21

Fig. 22

Fig. 23

Fig. 24

Fig. 25

Fig. 26

Fig. 27

Fig. 28

Fig. 29

<div align="center">

**INTERNATIONAL SEARCH REPORT**

</div>

| | International application No. |
|---|---|
| | PCT/JP2013/007221 |

**A. CLASSIFICATION OF SUBJECT MATTER**
*G09B29/00(2006.01)i*

According to International Patent Classification (IPC) or to both national classification and IPC

**B. FIELDS SEARCHED**

Minimum documentation searched (classification system followed by classification symbols)
G09B29/00-29/14, G01C21/00-21/36

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Yuzaburo IIMURA et al., Kokyo Sokuryo Kyotei TS GPS ni yoru Kijunten Sokuryo, first edition, Kabushiki Kaisha Toyo Shoten, 31 March 1998 (31.03.1998), pages 27 to 70 | 1-12 |
| A | Edited by Japan Association of Surveyors Soritsu 30 Shunen Kinen 'Gendai Sokuryogaku' Shuppan Iinkai, Gendai Sokuryogaku, vol.1, Sokuryo no Sugakuteki Kiso, Japan Association of Surveyors, 25 May 1981 (25.05.1981), pages 73 to 113 | 1-12 |
| A | Shoshichi NOMURA, Chizu Toeiho, first edition, Japan Map Center, 30 November 1983 (30.11. 1983), pages 265 to 336 | 1-12 |

| ☒ Further documents are listed in the continuation of Box C. | ☐ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 February, 2014 (21.02.14) | 04 March, 2014 (04.03.14) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2013/007221 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-64892 A  (Yugen Kaisha Hasegawa Shoji), 09 March 2006 (09.03.2006), paragraphs [0023] to [0078]; fig. 1 to 3 (Family: none) | 1-12 |
| A | JP 2002-351307 A  (Denso Corp.), 06 December 2002 (06.12.2002), paragraphs [0014] to [0054]; fig. 1 to 4 (Family: none) | 1-12 |
| A | JP 2012-85139 A  (The Kansai Electric Power Co., Inc.), 26 April 2012 (26.04.2012), paragraphs [0082] to [0087]; fig. 22 to 24 (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4684333 B
- JP 2012085139 A

- JP 2013001110 A
- JP 2013178833 A

**Non-patent literature cited in the description**

- Chronological Scientific Tables 2012 (desk size). MARUZEN PUBLISHING CO., LTD